# EUROPEAN PATENT APPLICATION

(11) **EP 4 722 915 A1**
(43) Date of publication of application: **08.04.2026**
(21) Application number: 25797163.0
(22) Date of filing: 19.03.2025
(51) Int. Cl.: G06F 9/50

(54) **SERVER SYSTEM, RESOURCE SCHEDULING METHOD FOR SERVER SYSTEM, AND CHIP AND CHIPLET**

(30) Priority: 30.04.2024 CN 202410538814
(71) Applicant: Suzhou Metabrain Intelligent Technology Co., Ltd., Suzhou, Jiangsu 215000 (CN)
(72) Inventor: WANG, Endong, Suzhou, Jiangsu 215000 (CN); GAO, Xianyang, Suzhou, Jiangsu 215000 (CN); HUANG, Jiaming, Suzhou, Jiangsu 215000 (CN); ZHAO, Weikang, Suzhou, Jiangsu 215000 (CN)
(74) Representative: Studio Torta S.p.A.
(86) International application number: PCT/CN2025/083537
(87) International publication number: WO 2025/227986

(57) **Abstract**

Provided in the embodiments of the present disclosure are a server system, a method for scheduling a resource of a server system, and a chip and a die. The server system includes: a multivariate computing resource pool, a data storage resource pool, a Switching Module (SM), and a control module. The multivariate computing resource pool includes a general computing resource pool and a heterogeneous computing resource pool; the general computing resource pool includes a set of general computing units; the heterogeneous computing resource pool includes a set of heterogeneous computing units; the multivariate computing resource pool is connected to the data storage resource pool via the SM by means of a cache coherence bus inside the server system; the data storage resource pool includes one or more data storage resources that are configured to be shared by at least two multivariate computing resources among a plurality of multivariate computing resources in the multivariate computing resource pool; and the control module is configured to perform computing power scheduling on one or more multivariate computing resources among the plurality of multivariate computing resources in the multivariate computing resource pool, and dynamically allocate one or more data storage resources among a plurality of data storage resources in the data storage resource pool to the one or more multivariate computing resources among the plurality of multivariate computing resources in the multivariate computing resource pool.

## Description

### CROSS-REFERENCE TO RELATED APPLICATION

This application claims priority to Chinese Patent Application No. 202410538814.4 filed to the China National Intellectual Property Administration on April 30, 2024 and entitled "Server System, method for scheduling resource of Server System, and Chip and Die", the disclosure of which is hereby incorporated by reference in its entirety.

### TECHNICAL FIELD

Embodiments of the present disclosure relate to the field of computers, and specifically, to a server system, a method for scheduling a resource of a server system, and a chip and a die.

### BACKGROUND

Computing power refers to the ability of computer devices or computing/data centers to process information. More broadly, the computing power may refer to computing resources, such as general computing power and heterogeneous computing power. In the related art, in order to integrate multivariate heterogeneous computing power, a general computing power kernel is typically used as a universal processing unit and scheduling kernel, and the heterogeneous computing power kernel serves as a slave kernel to achieve the accelerated computing of a specific application. These heterogeneous integrated processors use a master-slave operation mode. The heterogeneous computing power kernels as the slave kernels have the same architecture, which schedule given workloads through unified operating systems.

However, when the multivariate computing power kernel integrates more heterogeneous computing units, there are portions strongly related to instruction sets inside these computing units, and the large difference in the instruction sets between the kernels makes it difficult to achieve collaborative computing among various Instruction Set Architecture (ISA) kernels. Therefore, the multivariate computing power integration solution in the related art has the problem of poor scalability of computing power.

### SUMMARY

Embodiments of the present disclosure provide a server system, a method for scheduling a resource of a server system, and a chip and a die, so as to at least solve the problem of poor scalability of computing power of multivariate computing power integration solutions in the related art.

According to an aspect of the embodiments of the present disclosure, a server system is provided and includes: a multivariate computing resource pool, a data storage resource pool, a Switching Module (SM), and a control module, where the multivariate computing resource pool includes a general computing resource pool and a heterogeneous computing resource pool, the general computing resource pool includes a set of general computing units, the heterogeneous computing resource pool includes a set of heterogeneous computing units, and the multivariate computing resource pool is connected to the data storage resource pool via the SM by means of a cache coherence bus inside the server system; the data storage resource pool includes one or more data storage resources that are configured to be shared by at least two multivariate computing resources among a plurality of multivariate computing resources in the multivariate computing resource pool, and each of the plurality of multivariate computing resources in the multivariate computing resource pool includes one or more general computing units among the set of general computing units in the general computing resource pool and one or more heterogeneous computing units among the set of heterogeneous computing units in the heterogeneous computing resource pool; and the control module is configured to perform computing power scheduling on one or more multivariate computing resources among the plurality of multivariate computing resources in the multivariate computing resource pool, and dynamically allocate one or more data storage resources among a plurality of data storage resources in the data storage resource pool to the one or more multivariate computing resources among the plurality of multivariate computing resources in the multivariate computing resource pool.

According to another aspect of the embodiments of the present disclosure, a method for scheduling a resource of a server system is further provided. The server system includes: a multivariate computing resource pool, a data storage resource pool, a SM, and a control module, where the multivariate computing resource pool includes a general computing resource pool and a heterogeneous computing resource pool, the general computing resource pool includes a set of general computing units, the heterogeneous computing resource pool includes a set of heterogeneous computing units, and the multivariate computing resource pool is connected to the data storage resource pool via the SM by means of a cache coherence bus inside the server system; the data storage resource pool includes one or more data storage resources that are configured to be shared by at least two multivariate computing resources among a plurality of multivariate computing resources in the multivariate computing resource pool, and each of the plurality of multivariate computing resources in the multivariate computing resource pool includes one or more general computing units among the set of general computing units in the general computing resource pool and one or more heterogeneous computing units among the set of heterogeneous computing units in the heterogeneous computing resource pool. The method includes: performing, by the control module, computing power scheduling on one or more multivariate computing resources among the plurality of multivariate computing resources in the multivariate computing resource pool, and dynamically allocating one or more data storage resources among a plurality of data storage resources in the data storage resource pool to the one or more multivariate computing resources among the plurality of multivariate computing resources in the multivariate computing resource pool.

According to yet another aspect of the embodiments of the present disclosure, a chip is provided and includes multivariate computing resources, an on-chip memory, and a control kernel, which are connected to each other via an on-chip cache coherence bus of the chip. The multivariate computing resources include general computing resources and heterogeneous computing resources, the general computing resources include a set of general processors, and the heterogeneous computing resources include a set of heterogeneous acceleration processors. The on-chip memory is configured to be shared by one or more general processors among the set of general processors in the general computing resources and one or more heterogeneous acceleration processors among the set of heterogeneous acceleration processors in the heterogeneous computing resources. The control kernel is configured to perform computing power scheduling on one or more general processors among the set of general processors in the general computing resources and one or more heterogeneous acceleration processors among the set of heterogeneous acceleration processors in the heterogeneous computing resources.

According to yet another aspect of the embodiments of the present disclosure, a die is provided and includes a set of kernels and one or more memory controllers, which are connected to each other via an on-chip cache coherence bus in the die. The set of kernels include a control kernel and multivariate processor kernels, where the multivariate processor kernels include a set of general processor kernels and a set of heterogeneous acceleration processor kernels, and each kernel among the set of kernels has a private cache, and the set of kernels share a specified cache, and one or more memories controlled by at least one memory controller among the one or more memory controllers. The control kernel is configured to perform computing power scheduling on one or more general processor kernels among the set of general processor kernels and one or more heterogeneous acceleration processor kernels among the set of heterogeneous acceleration processor kernels.

Through the present disclosure, computing power and resources are pooled by centering on interconnection and switching of the cache coherence bus inside the server. Furthermore, hardware decoupling (the SM and the control module, etc. may be replaced as needed) and elastic combination are implemented for the multivariate computing unit and system resource. The server system includes the multivariate computing resource pool, the data storage resource pool, the SM, and the control module. The multivariate computing resource pool includes the general computing resource pool and the heterogeneous computing resource pool, the general computing resource pool includes the set of general computing units, the heterogeneous computing resource pool includes the set of heterogeneous computing units, and the multivariate computing resource pool is connected to the data storage resource pool via the SM by means of the cache coherence bus inside the server system. The data storage resource pool includes one or more data storage resources that are configured to be shared by at least two multivariate computing resource (e.g., one or more general computing units and one or more heterogeneous computing units) among a plurality of multivariate computing resources in the multivariate computing resource pool. Moreover, performing, by the control module, computing power scheduling on one or more multivariate computing resources among the plurality of multivariate computing resources in the multivariate computing resource pool, and dynamically allocating one or more data storage resources among a plurality of data storage resources in the data storage resource pool to the one or more multivariate computing resources among the plurality of multivariate computing resources in the multivariate computing resource pool. Multivariate computing power collaboration is realized by the SM via the cache coherence bus inside the server system, and the scaling of computing power may be performed with the help of the scalability of the SM, such that the technical effect of improving computing power scalability may be achieved, solving the problem of poor scalability of computing power of multivariate computing power integration solutions in the related art, thereby achieving the technical effect of improving computing power scalability.

### BRIEF DESCRIPTION OF THE DRAWINGS

Fig. 1 is a block diagram of a hardware structure of an optional server device according to an embodiment of the present disclosure.
Fig. 2 is a structural block diagram of an optional server system according to an embodiment of the present disclosure.
Fig. 3 is a structural block diagram of another optional server system according to an embodiment of the present disclosure.
Fig. 4 is a schematic diagram of memory decoupling and pooling in an optional single-host multi-chip system according to an embodiment of the present disclosure.
Fig. 5 is a schematic diagram of multi-host shared storage resource pooling in an optional single-host multi-chip system according to an embodiment of the present disclosure.
Fig. 6 is a schematic diagram of a high-level architecture of an optional single-host multi-chip system according to an embodiment of the present disclosure.
Fig. 7 is a schematic diagram of an optional single-host multi-chip single-node server according to an embodiment of the present disclosure.
Fig. 8 is a schematic diagram of an optional Multi-platform Processing Module (MPPM) according to an embodiment of the present disclosure.
Fig. 9 is a schematic diagram of an optional single-host multi-chip standardized interface according to an embodiment of the present disclosure.
Fig. 10 is a schematic diagram of an optional single-host multi-chip multi-node modular server according to an embodiment of the present disclosure.
Fig. 11 is a schematic diagram of a system-level single-host multi-chip integrated architecture server according to an embodiment of the present disclosure.
Fig. 12 is a schematic diagram of a high-level architecture of an optional memory resource pool according to an embodiment of the present disclosure.
Fig. 13 is a schematic diagram of an optional CXL bus switching unit according to an embodiment of the present disclosure.
Fig. 14 is a schematic diagram of an optional memory resource management engine according to an embodiment of the present disclosure.
Fig. 15 is a schematic diagram of an asset information display and management module of a resource management module according to an embodiment of the present disclosure.
Fig. 16 is a schematic diagram of dynamic allocation and scheduling resources of a management system according to an embodiment of the present disclosure.
Fig. 17 is a schematic diagram of an optional management control system according to an embodiment of the present disclosure.
Fig. 18 is a schematic diagram of optional management software according to an embodiment of the present disclosure.
Fig. 19 is a schematic diagram of integrated management of an optional single-host multi-chip system according to an embodiment of the present disclosure.
Fig. 20 is a schematic diagram of a DVFS voltage regulation mode of an optional multi-kernel processor according to an embodiment of the present disclosure.
Fig. 21 is a schematic diagram of an optional multi-level power consumption management mechanism according to an embodiment of the present disclosure.
Fig. 22 is a schematic diagram of an optional single-host multi-chip coordination and unified scheduling operating system architecture according to an embodiment of the present disclosure.
Fig. 23 is a schematic diagram of a resource scheduling design solution of an optional single-host multi-chip system according to an embodiment of the present disclosure.
Fig. 24 is a schematic diagram of a resource scheduling and allocation flow of an optional single-host multi-chip system according to an embodiment of the present disclosure.
Fig. 25 is a schematic diagram of an optional two-dimensional mesh structure according to an embodiment of the present disclosure.
Fig. 26 is a schematic diagram of an optional three-dimensional mesh structure according to an embodiment of the present disclosure.
Fig. 27 is a schematic flowchart of an optional method for scheduling a resource of a server system according to an embodiment of the present disclosure.
Fig. 28 is a structural block diagram of an optional chip according to an embodiment of the present disclosure.
Fig. 29 is a structural block diagram of another optional chip according to an embodiment of the present disclosure.
Fig. 30 is a structural block diagram of an optional die according to an embodiment of the present disclosure.
Fig. 31 is a structural block diagram of another optional die according to an embodiment of the present disclosure.

### DETAILED DESCRIPTION

The embodiments of the present disclosure are described below in detail with reference to the drawings and the embodiments.

It is to be noted that terms "first", "second" and the like in the description, claims and the above mentioned drawings of the present disclosure are used for distinguishing similar objects rather than describing a specified sequence or a precedence order.

As a new generation of productive forces in the digital economy, computing power may inject fresh momentum into driving digital transformation across all industries. The computing power refers to the ability of computer devices or computing/data centers to process information. More broadly, the computing power may refer to computing resources, such as general computing power and heterogeneous computing power. Herein, the general computing power may be a Central Processing Unit (CPU), and the heterogeneous computing power may be a Graphics Processing Unit (GPU), a Field Programmable Gate Array (FPGA), an Application Specific Integrated Circuit (ASIC), etc.

With the accelerated development of core digital economy technologies such as cloud computing, artificial intelligence, big data, etc., new scenarios and demands continue to emerge, driving rapid growth in computing power scale and application scenarios. The computing industry now faces trends and challenges characterized by diversification, massive scale, and ecological dispersion. Diverse scenarios need more efficient, versatile, and flexible computing power support. However, a significant gap persists in conversion from chips into computing power, and the value of multivariate computing power (e.g., the foregoing general computing power, heterogeneous computing power, etc.) has not been fully released. For the challenges posed by diverse computing power, building a collaborative computing power industry system and releasing the value of multivariate computing power are key technical directions for the development of new-generation computing infrastructure.

There are significant differences in the technical solutions, system architectures, software platforms, hardware devices, and service guarantees of different computing power platforms. For example, a X86 architecture is a mainstream CPU architecture in a data center, has a complete ecosystem and a complex instruction set, making it suitable for complex infrastructure environments for heavy-load services. However, the increasing complexity of instruction sets has led to reduced CPU efficiency and universality, while also increasing system complexity. For example, an Advanced RISC Machines (ARM) architecture (a microprocessor architecture) CPU has more kernels per unit area, and is suitable for low-power and high concurrency computing services (e.g., cloud gaming, distributed databases, containerized deployment, distributed storage, etc.) For another example, a Performance Optimization With Enhanced Reduced (POWER) Instruction Set Computing architecture has performance advantages in the field of high-end servers, leads the industry in software and hardware reliability, availability, and maintainability, and this is suitable for critical host service scenarios such as high-performance computing, etc.

In view of the characteristics of CPU platforms and diverse application scenarios, the primary countermeasure at the hardware design level currently involves customizing servers with different specifications and models. However, CPU platforms undergo iterative development across multiple generations, with each generation offering various product forms such as single-channel, dual-channel, and quad-channel designs. These platforms have various configurations of memory, storage, heterogeneous accelerators, and management components, resulting in a vast array of platform design combinations. Hardware-tightly coupled designs pose significant challenges for resource utilization, management, and operations in the data center, leading to problems of energy wastage, high upgrade and expansion costs, etc., thus affecting the full release of system performance.

In another aspect, with the development of computer applications such as artificial intelligence, big data, etc., the demand for computing power has surged dramatically. General CPUs increasingly encounter performance bottlenecks when handling massive computations and vast amounts of data/images, including low computational parallelism, low bandwidth, excessive time delay, etc. Traditional server architectures using the CPU as the computing kernel may no longer meet today's demands, such that the design of next-generation server architectures faces entirely new challenges. In order to efficiently process various computing tasks, different types of heterogeneous acceleration processors such as GPUs, FPGAs, ASICs, etc. have emerged. Computing architectures are progressively moving beyond systems using CPUs as centers, with the "CPU + heterogeneous accelerator" architecture emerging as the mainstream server architecture for contemporary applications such as artificial intelligence, high-performance computing, etc. Different heterogeneous acceleration processors each have distinct characteristics, suited for varying computing models. Among these, the CPU+GPU combination is more adaptable to general scenarios and remains the mainstream choice today; and the CPU+ASIC/FPGA combination has synchronously developed due to its outstanding performance in specialized applications such as inference and training, contributing to a landscape of diverse and flourishing solutions.

However, current heterogeneous computing acceleration chips face challenges such as inconsistent hardware system interfaces and interconnect protocols, along with incompatible software ecosystems. These challenges severely constrain the deployment of heterogeneous computing infrastructure and application development. Multivariate computing power also needs to be continuously innovated from "functional" to "user-friendly" and generate values.

In order to improve system computing power, a homogeneous multi-kernel design is used in the related art, and computing power requirements are met through multi-kernel parallel operations. However, homogeneous multi-kernel architectures lack advantages in scenarios with diverse requirements. Facing the growing demand for diverse application scenarios and heterogeneous computing power, some processors have achieved heterogeneous multi-kernels within the same instruction set (multi-kernels have different register types, register counts, register descriptions, etc.). Multi-kernels achieve functions such as data flow monitoring, performance monitoring, time delay and bandwidth optimization, power management, etc. through a dynamic sharing unit. A task scheduler statically or dynamically allocates processors to tasks based on the performance requirements of each task and the processing capacity of the kernels. However, these chips still share similar kernel architectures with the same instruction set, failing to meet the requirements of collaborative work scenarios requiring multivariate, heterogeneous and different ISA kernels (processor kernels).

In a multivariate heterogeneous integrated aspect, in the related art, a general processor (CPU) is typically used as a general processing unit and scheduling kernel, while a heterogeneous acceleration kernel serves as a slave kernel to achieve the accelerated computing of a specific application. These heterogeneous integrated processors use a master-slave operation mode. The heterogeneous computing power slave kernels have the same architecture, which schedules given workloads through unified operating systems, such that computing performance and efficiency may be optimized. However, when the multivariate computing power kernel integrates more heterogeneous computing units, such as dedicated acceleration in the fields of GPU, FPGA, ASIC, etc. of different manufacturers, there are portions strongly related to instruction sets inside these computing chips, and the large difference in the instruction sets between the kernels makes it difficult to achieve collaborative computing among various ISA kernels.

Furthermore, fields and scenarios in the related art are becoming increasingly fragmented, with a growing number of heterogeneous processor engine architectures from different manufacturers, such that the establishment of an efficient, standardized, and open ecosystem is also required to fully collaboratively use multivariate heterogeneous computing and multi-instruction-set processors, meeting diversified application requirements, thereby improving system efficiency.

In order to at least partially solve the above technical problems, in this embodiment, using an application as an orientation and using the system architecture design as a core, and through a "system-component-chip-software" multi-level collaborative design, a high-performance and efficient server is provided. Therefore, unified management and scheduling of multivariate computing power are realized, the system advantage of multivariate computing power is fully achieved, causing computing power to be user-friendly and usable, and promoting the popularization and application of the artificial intelligence technology, thereby accelerating computing power development. Herein, through the above multi-level collaborative design, a multi-chip integrated architecture may be realized through the single-host multi-chip design. The multi-chip here may refer to a plurality of chips, and single-host multi-chip refers to one server host and the plurality of chips.

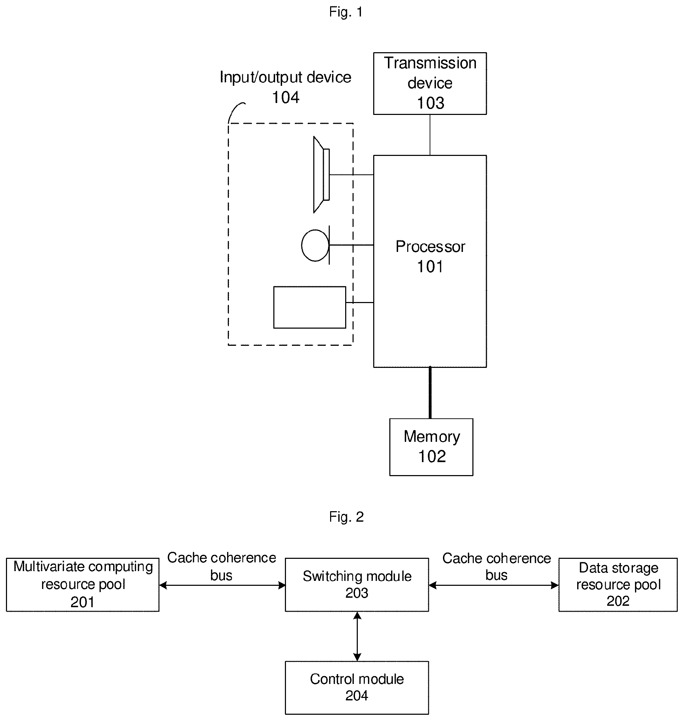

According to an aspect of the embodiments of the present disclosure, a server system is provided. The server system may correspond to a server device. Fig. 1 is a block diagram of a hardware structure of an optional server device according to an embodiment of the present disclosure. As shown in Fig. 1, the server device may include one or more (only one is shown in Fig. 1) processors 101 (the processor 101 may include, but is not limited to, a processing apparatus such as a microprocessor MCU or a programmable logic device FPGA) and a memory 102 for storing data. The above server device may further include a transmission device 103 for achieving a communication function and an input/output device 104. Those skilled in the art may understand that the structure shown in Fig. 1 is only for schematic purposes, which does not limit the structure of the above server device. For example, the server device may also include more or less components than those shown in Fig. 1, or have a different configuration from that shown in Fig. 1.

The memory 102 may be configured to store a computer program, for example, a software program and a module of application software, such as a computer program corresponding to a method for scheduling a resource of a server system in the embodiments of the present disclosure. The processor 101 runs the computer program stored in the memory 102, so as to execute various functional applications and data processing, that is, to realize the above method. The memory 102 may include a high-speed random access memory, and may further include a non-volatile memory, such as one or more magnetic disk memory apparatuses, a flash memory device, or other non-volatile solid-state memory devices. In some embodiments, the memory 102 may further include memories remotely disposed relative to the processor 101. These remote memories may be connected to a server device via a network. Examples of the above NW include, but are not limited to, the Internet, an intranet, a local area NW, a mobile communication NW, and a combination thereof.

The transmission device 103 is configured to receive or send data via the network. The above optional network example may include a wireless network provided by a communication provider of the server device. In an example, the transmission device 103 includes a Network Interface Controller (NIC), and may be connected to other NW devices by using a base station, so as to communicate with the Internet. In an example, the transmission device 103 is a Radio Frequency (RF) module, which is configured to communicate with the Internet in a wireless manner.

The server system in this embodiment may be shown in Fig. 2. The server system may include a multivariate computing resource pool 201, a data storage resource pool 202, a SM 203, and a control module 204.

Herein, the multivariate computing resource pool 201 is connected to the data storage resource pool 202 via the SM 203 by means of a cache coherence bus (internal bus) inside the server system. The multivariate computing resource pool 201 includes a general computing resource pool and a heterogeneous computing resource pool. The general computing resource pool includes a set of general computing units, and the heterogeneous computing resource pool includes a set of heterogeneous computing units. In some embodiments, each general computing unit among the set of general computing units in the multivariate computing resource pool may be a Central Processing Unit (CPU); and the set of heterogeneous computing units in the multivariate computing resource pool may include one or more of a Graphics Processing Unit (GPU), a Field Programmable Gate Array (FPGA), an Application Specific Integrated Circuit (ASIC) in any combination, or may also be other general computing units or heterogeneous computing units. The cache coherence bus is a special hardware mechanism. By means of the cache coherence bus inside the server, cache data coherency of each processor kernel may be maintained in a plurality of processor systems.

The data storage resource pool 202 includes one or more data storage resources that are configured to be shared by at least two multivariate computing resources among a plurality of multivariate computing resources in the multivariate computing resource pool 201. The one or more data storage resources may be system resources for data storage, which may be a shared memory, a storage device, etc., or may also be other system resources capable of performing data storage. In addition to the data storage resource in the data storage resource pool 201, the multivariate computing resource in the multivariate computing resource pool 201 may include a private data storage resource such as a private cache, etc., and this embodiment is not limited thereto. Herein, each of the plurality of multivariate computing resources in the multivariate computing resource pool 201 may include one or more general computing units among the set of general computing units in the general computing resource pool and one or more heterogeneous computing units among the set of heterogeneous computing units in the heterogeneous computing resource pool.

The control module 204 is configured to perform computing power scheduling on one or more multivariate computing resources among the plurality of multivariate computing resources in the multivariate computing resource pool 201, and dynamically allocate one or more data storage resources among a plurality of data storage resources in the data storage resource pool 202 to the one or more multivariate computing resources among the plurality of multivariate computing resources in the multivariate computing resource pool 201. Herein, the SM 203 and the control module 204 may be obtained by performing modular design on a server host by means of board-level decoupling (referring to a decoupling manner used at a printed circuit board level, and the printed circuit board here may be a server mainboard), and may include one or more controllers such as a management controller. Correspondingly, the multivariate computing resource pool 201 may be integrated into one or more multivariate computing modules, and the data storage resource pool 202 may be integrated into one or more data storage modules. Through the above modular design, hardware decoupling of heterogeneous computing power units may be realized. Multivariate computing power collaboration is realized through open coherency interconnection and switching. Heterogeneous kernel share system resources such as the data storage resources, thereby achieving computing power and resource pooling. It is to be noted that, resource module decoupling is implemented through a physical form, and each module may be replaced individually according to requirements. Traditional servers are integrally designed, and decoupling may not be realized.

The SM 203 may include a set of switching units, and each of the set of switching units may include one or more switching chips. Different types of data storage resources or other system resources may be connected to the multivariate computing resource pool 201 by using different switching units. For example, the data storage resource in the data storage resource pool 202 is a CXL memory, and the corresponding switching chip may be a CXL switching chip.

It is to be noted that, multivariate computing power collaboration is implemented via the SM 203 by means of the cache coherence bus inside the server system. Moreover, the scaling of computing power may be performed with the help of the scalability of the SM 203, such that the technical effect of improving computing power scalability may be achieved, The unit scheduled by the control module to perform computing power scheduling may be at least one of the general computing unit or the heterogeneous computing unit; and the unit to which multivariate computing resource is dynamically allocated by the data storage resource may be at least one of the general computing unit or the heterogeneous computing unit.

According to the server system in this embodiment, the server system includes: the multivariate computing resource pool, the data storage resource pool, the SM, and the control module, where the multivariate computing resource pool includes the general computing resource pool and the heterogeneous computing resource pool, where the general computing resource pool includes the set of general computing units, the heterogeneous computing resource pool includes the set of heterogeneous computing units, and the multivariate computing resource pool is connected to the data storage resource pool via the SM by means of the cache coherence bus inside the server system; the data storage resource pool includes one or more data storage resources that are configured to be shared by at least two multivariate computing resources among a plurality of multivariate computing resources in the multivariate computing resource pool, and each of the plurality of multivariate computing resources in the multivariate computing resource pool includes one or more general computing units among the set of general computing units in the general computing resource pool and one or more heterogeneous computing units among the set of heterogeneous computing units in the heterogeneous computing resource pool; and the control module is configured to perform computing power scheduling on one or more multivariate computing resources among the plurality of multivariate computing resources in the multivariate computing resource pool, and dynamically allocate one or more data storage resources among a plurality of data storage resources in the data storage resource pool to one or more multivariate computing resources among the plurality of multivariate computing resources in the multivariate computing resource pool. Therefore, the problem of poor scalability of computing power of multivariate computing power integration solutions in the related art is solved, and the scalability of computing power is improved.

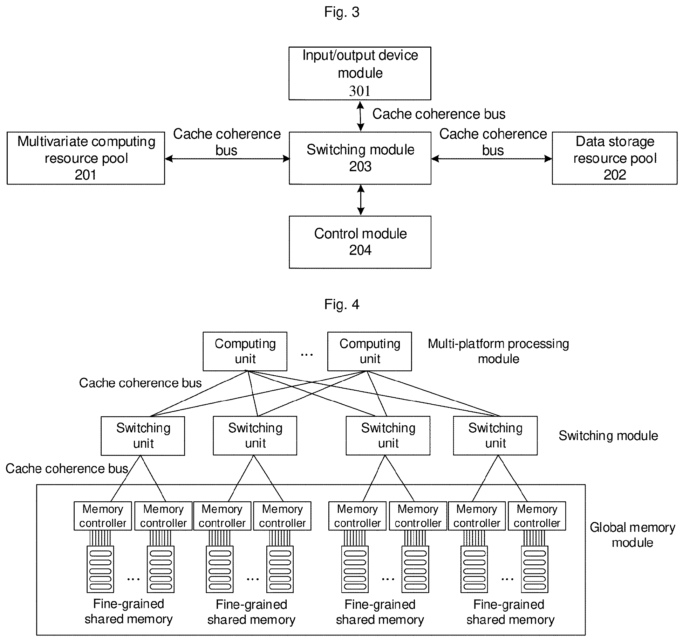

In some exemplary embodiments, as shown in Fig. 3, the server system further includes an Input/Output Device Module (IODM) 301. The IODM 301 is connected to the multivariate computing resource pool 201 via the SM 203 by means of the cache coherence bus inside the server system. The IODM is also referred to as an I/O module.

The data storage resource pool 201 may include a memory resource pool and a storage resource pool, the memory resource pool may include a set of shared memories, and the storage resource pool may include a set of storage devices. The memory resource pool is integrated into one or more memory modules, and the storage resource pool is integrated into one or more Storage Device Modules (SDM). The SM 203, the IODM 301, the memory module, and the SDM herein may all be hardware modules, and different hardware modules may be connected to other modules via corresponding interfaces (which may be interfaces defined based on standardization). After passing through the standardized interface, resource module decoupling may be implemented through a physical form, and each module may be individually replaced more conveniently according to requirements.

The multivariate computing resource pool may be integrated into one or more multivariate computing modules, a multivariate computing module may be an MPPM, and the MPPM may be a computing module including a plurality of chips. The MPPM may internally reserve kernel components only (e.g., a processor and a memory such as a CPU on the server mainboard may be used as kernels to constitute the MPPM). The MPPM may be replaced with different processor platforms, or may also be compatible with various systems, including single-channel and dual-channel configurations, etc.

In some embodiments, each multivariate computing module among the one or more multivariate computing modules may be connected to one or more other modules in the server system other than the one or more multivariate computing modules via one or more preset interfaces. and the one or more other modules include at least one of the following: the SM or the control module. Each of the one or more preset interfaces used for connecting to different modules may be the same or different.

For example, an entire architecture designed by a single-host multi-chip system is shown in Fig. 4, so as to realize the hardware decoupling of heterogeneous computing power. Multivariate computing power collaboration is realized through open coherency interconnection and switching. The heterogeneous kernel shares the memory and shares the I/O resource, thereby achieving computing power and resource pooling. A design management scheduling unit (an example of the foregoing control module) implements system starting and the dynamic scheduling of resources according to requirements. A design system management unit implements management functions such as entire system resources, topology, power supply and power consumption management, state monitoring, etc. At a software level, a unified framework for bottom hardware-strongly-related drive and programming interfaces is formed, and a communication between heterogeneous kernels is achieved at an operating system level, such that an operating system still has a global state under different ISA kernel running examples. An upper-layer application remains unaware of bottom hardware, such that the application may automatically select optimal mapping for computing power allocation. Herein, in Fig. 4, the MPPM may include a plurality of computing units (which may include the general computing units, or may also include the heterogeneous computing units). The SM may include a plurality of switching units, and the computing units are connected to the switching units via the cache coherence bus (internal bus). The memory module (global memory module) includes a set of shared memories (fine-grained shared memories), and the shared memories are connected to the switching units via the cache coherence bus through a memory controller.

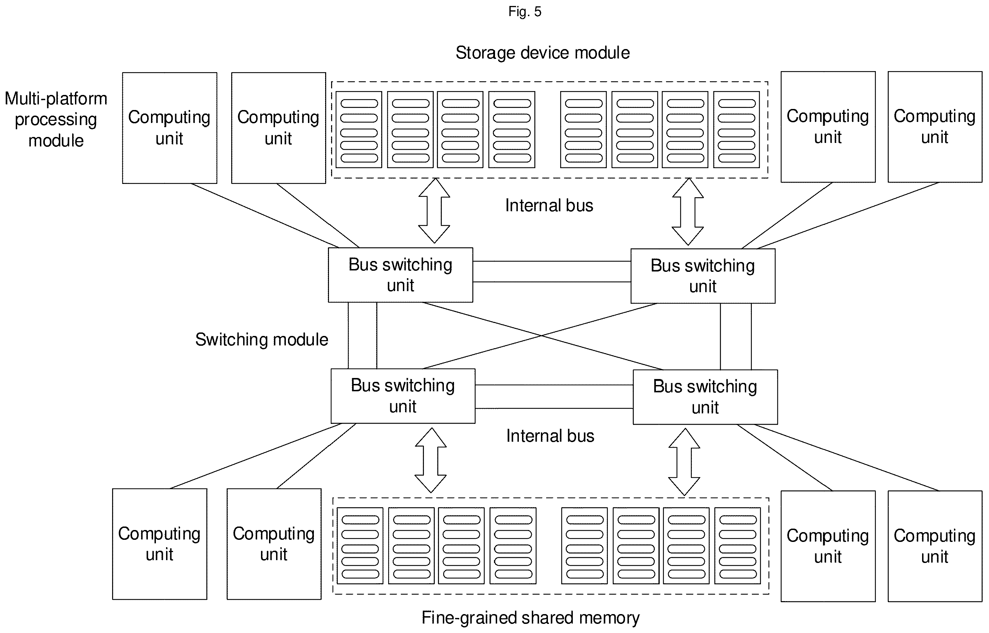

At a system level, a memory is a core component of a computer system, and memory capacities and bandwidths directly affect the computing performance of the system. At present, the local memory of the computer system is limited by a parallel bus and a system space, and capacity expansion and dynamic allocation may not be realized according to requirements, leading to expansion of memory bandwidth and capacity to be unable to match requirements for rapid increasing CPU kernel counts. With the advent of serial cache coherence buses, low-delay access paths and cache coherency guarantees are provided for the multi-chip shared memory. The system-level shared memory may implement remote expansion and physical pooling of low-delay, high-bandwidth, and high-capacity memory resources based on the serial cache coherence bus and its high-performance switching. Remote memory dynamic allocation and fine-grained address space sharing are realized through software definition, and requirements of diversified computing power for shared memory are met through software and hardware adaptation and optimization, thereby reducing losses of different computing platforms during service migration, and improving overall computing efficiency, as shown in Fig. 5.

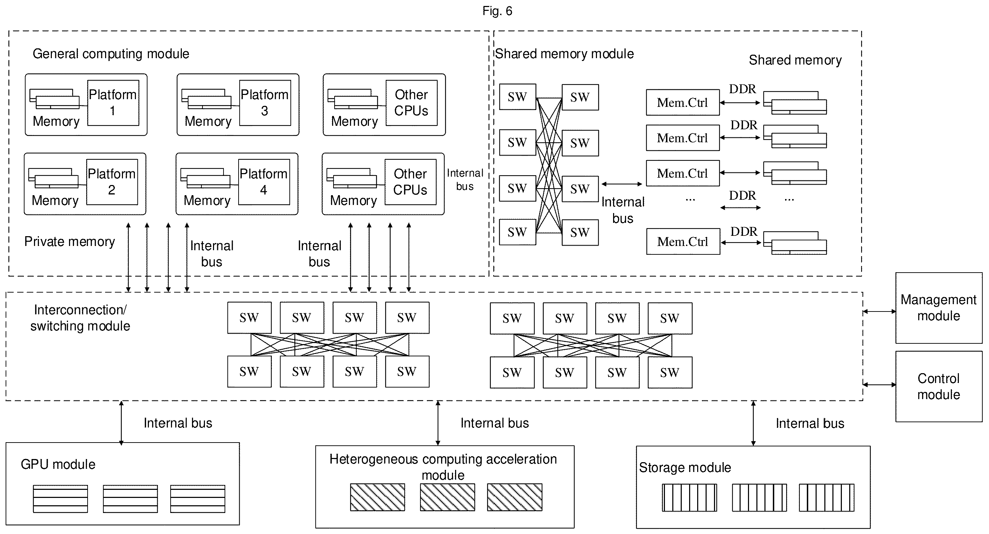

At a system-level storage level, performance expansion of current host systems is limited to system interconnect bandwidth, performance mismatches between storage at each level, and low I/O resource utilization. The single-host multi-chip system achieves resource decoupling of the storage device, realizes resource pooling of the storage device through high-performance switching of the internal bus and software definition system design, dissolves a binding relationship between the storage device and the computing unit at a physical link level, may flexibly adjust port configurations and resource allocation paths of a switching network, and divides shared resource pools in a fine-grained manner, thereby realizing the requirement-based flexible allocation and multi-host sharing of the resources of the storage device, as shown in Fig. 6. In Fig. 6, a CPU in a general computing module may be a CPU from different platforms. The SM may include the set of switching chips (Switch, SW). The shared memory may be connected to the memory controller (Mem.Ctrl) by using a Double Data Rate (DDR) technology.

Through this embodiment, modular design is performed on the multivariate computing resource, the memory resource, the storage device resource, etc., and the multivariate computing module is connected to other modules via standard interfaces, such that the transferability of the multivariate computing resource between different platforms may be improved, and the flexibility of establishing the server system is improved simultaneously.

In some exemplary embodiments, the server system further includes: a heat dissipation module, configured to perform heat dissipation on at least part of devices in the server system; a power supply module, configured to supply power to the server system; and a network module, configured to establish a network connection for the server system.

In order to improve the running safety of a server, the server system further includes the heat dissipation module, which is configured to perform heat dissipation on at least part of devices in the server system. In order to ensure the normal running of the server system, the server system further includes the power supply module, which is configured to supply power to the server system. In order to cause the server system to be able to connect to a network, the server system further includes the network module, which is configured to establish the network connection for the server system. Correspondingly, other modules above further include at least one of the following: the heat dissipation module, the power supply module, or the network module.

Herein, the heat dissipation module may be a cooling fan. Herein, the server system may include a baseboard management controller. The cooling fan herein may be an intelligent peripheral inserted in the baseboard management controller. At least partial module in the foregoing server system may be located on the baseboard management controller.

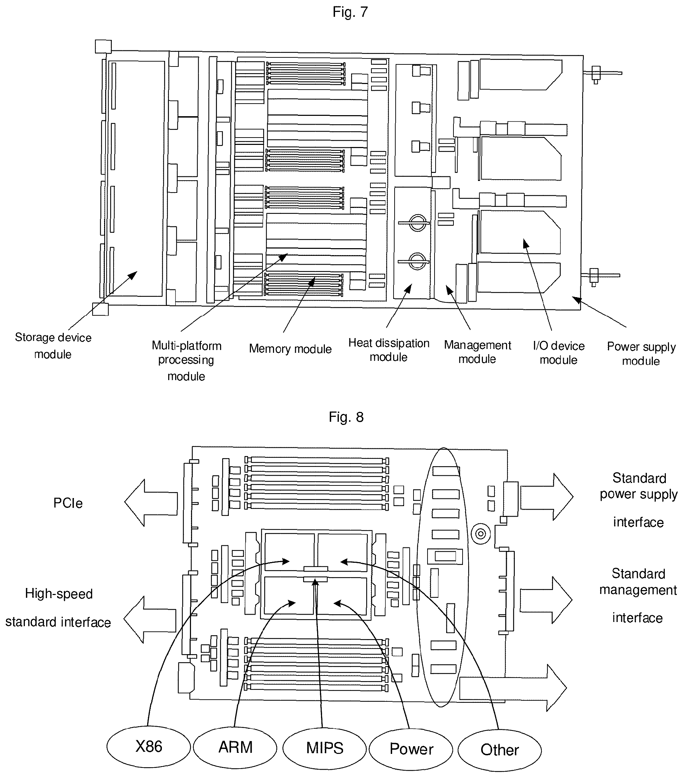

For example, as shown in Fig. 7, for a decoupling design of a single-host multi-chip single-node server, the modular design of the server host is implemented by means of board-level decoupling of the MPPM, the SDM, the management module (which may be the foregoing control module, or may also be another module different from the control module), the IODM, etc. Standardized design and interconnection are performed between different modules, and different processor platforms are flexibly switched by replacing the MPPM, thereby realizing design on demand, asynchronous upgrades, and agile delivery of the host system. The MPPM is shown in Fig. 8, and may be adapted to various processor platforms (i.e., a computing platform and a CPU platform). Herein, the CPU and memory on the server mainboard may be used as kernels to constitute the MPPM. The CPU may be different CPU platforms such as X86, ARM, Microprocessor without interlocked piped stages (MIPS), Power, etc. The MPPM externally provides standard interfaces such as Peripheral Component Interconnect express (PCIe)/CXL, power supply, management, etc., and is connected to each unit in a single-node server in Fig. 7.

Herein, the manner of asynchronously upgrading the single-node server may include replacing the SDM, the MPPM, the heat dissipation module, the management module, the IODM, etc. Through standardization-based definition, compared to existing servers, the single-host multi-chip system architecture may achieve hardware decoupling design, and may realize asynchronous upgrades and on-demand design by replacing the units.

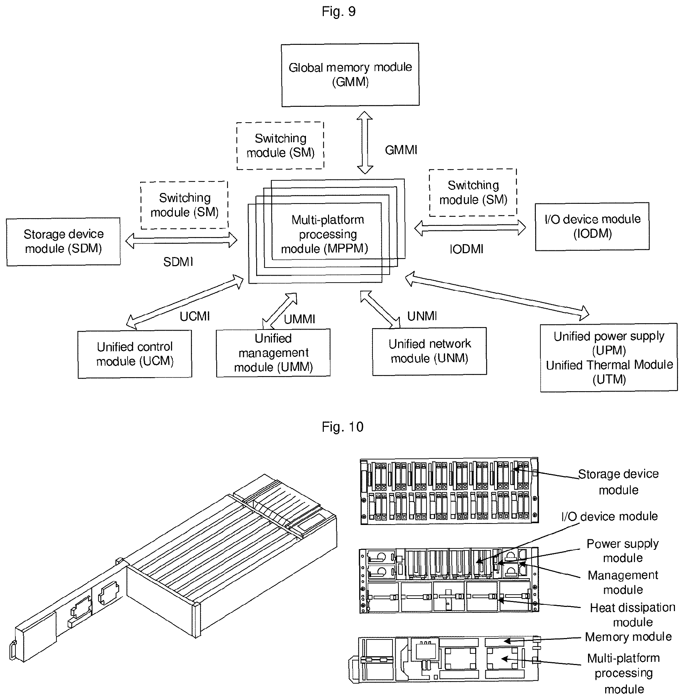

For the single-host multi-chip flexible architecture, the modular design of the heterogeneous computing unit with the storage resource (storage device resource), the I/O resource (I/O device resource), and the memory resource is realized through hardware decoupling and standardized interface definition. The host system is constituted through unified management, network, power supply, and heat dissipation; and the software definition system design flexibly provides multivariate computing power. A standardized defined high-level architecture is shown in Fig. 9, the MPPM is in coherence connection with the following modules via the standard interface: the SDM, the IODM, and the Global Memory Module (GMM), and realizes resource sharing and dynamic allocation through the SM.

Furthermore, as shown in Fig. 9, a Unified Management Module (UCM) is responsible for kernel scheduling and collaboration of multivariate computing power. The entire system performs system-level integration through basic modules such as a Unified Network Module (UNM), a Unified Management Module (UMM), a Unified Power Module (UPM), a Unified Thermal Module (UTM), etc., thereby entirely achieving a system-level single-host multi-chip system architecture.

Referring to Fig. 9, interfaces used for connecting the MPPM and each module respectively are a Storage Device Module Interface (SDMI), an I/O Device Module Interface (IODMI), a Global Memory Module Interface (GMMI), a Unified Management Module Interface (UCMI), a Unified Management Module Interface (UMMI), and a Unified Network Module Interface (UNMI).

Herein, the single-host multi-chip design performs hardware decoupling and flexible combination of the multivariate computing module and the system resource at the server system architecture level, and differentiated design and integration of the bottom hardware are realized through standardized interface definition and unified system management. The system design centers on the cache coherence bus inside the high-performance server interconnection and switching. Multivariate computing power collaboration computing and on-demand resource allocation are achieved through software-defined system design, and multivariate computing power integration and load balancing are realized through collaborative innovation between the operating system and software. Through the collaborative design of hardware and software, the integration and efficient collaboration of chips, components, systems, and software are achieved. Facing the characteristics of heterogeneous and diversified computing power, the single-host multi-chip system may rapidly and efficiently combine multivariate computing power, and perform flexible adaptation and optimization to fully realize the advantages of multivariate computing power. Therefore, with key components and component performance limited, system performance is improved through system architecture innovation, and data center bottlenecks are mitigated. The above solution may be extended to data center-level multivariate heterogeneous integrated modular design.

It is to be noted that, the SM may be a bus SM inside a server such as PCle/CXL, etc., which is configured to expand the CPU resource. The UCM is responsible for kernel scheduling and collaboration of multivariate computing power, and is consistent with the foregoing management scheduling unit; and the UCM is defined based on standardization.

Through this embodiment, the multivariate computing module is connected to the heat dissipation module, the power supply module, and the network module via the standard interfaces, such that the normal operation of the multivariate computing module may be ensured, thereby improving the operation safety and networking function of the multivariate computing module.

In some exemplary embodiments, the one or more multivariate computing modules comprise a plurality of multivariate computing modules, the plurality of multivariate computing modules are in plug-in connection with a host of the server system, and different multivariate computing modules of the plurality of multivariate computing modules are connected to each other via the cache coherence bus inside the server system. The corresponding server may be a single-host multi-chip multi-node modular server.

An example of the single-host multi-chip multi-node modular server is shown in Fig. 10, and has the advantages of easy deployment, flexible scalability, high density, a higher performance-to-power ratio, etc. The shape of the multi-node modular server is adapted to various computing platforms through a plug-in MPPM, and performs system integration through standardized interface and high-speed signal backplane design, resource module decoupling, unified management and heat dissipation. The global cache coherence between the MPPMs is maintained via the open internal cache coherence bus.

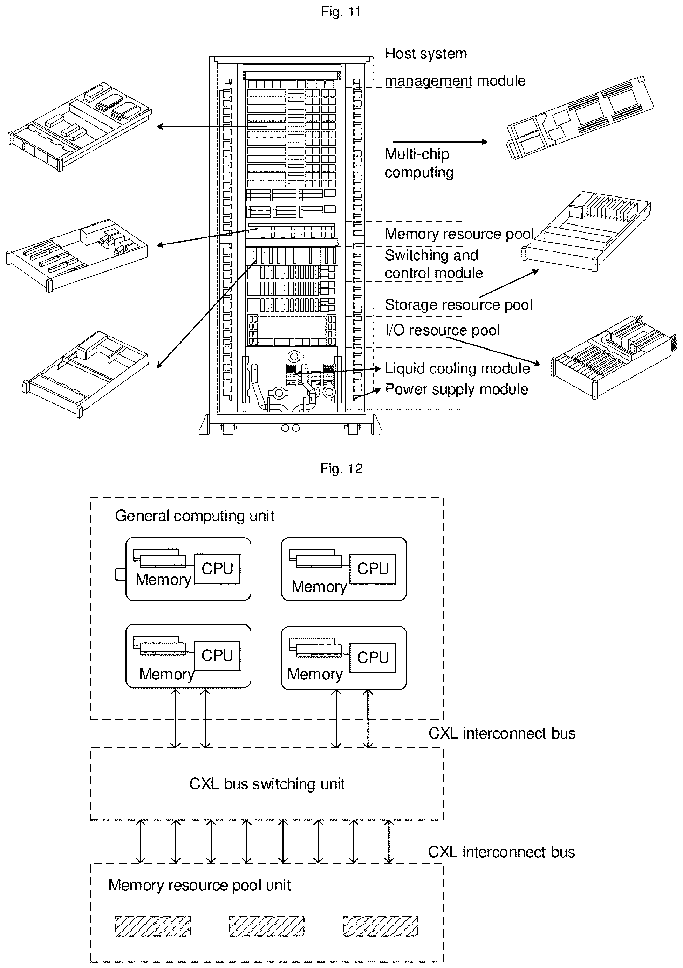

A single-host multi-chip system-level server host is shown in Fig. 11. Facing diverse application requirements, the design using the CPU as the center is changed. Through key technologies such as hardware decoupling, high-speed coherence interconnect, etc., the entire server is decoupled and reconfigured by using internal bus switching as a core. The collaborative computing of various general processor platforms and heterogeneous acceleration units such as a Data Processing Unit (DPU), a GPU, a FPGA, etc. is realized at the system level, thereby achieving hardware decoupling, pooling, and asynchronous iteration of large-scale computing resources, memory resources, heterogeneous acceleration resources, and storage resources. Through the software-defined system design, the collaborative dynamic scheduling of the computing power resources is achieved. The host and resource pool in the entire system are systematically integrated through unified management, heat dissipation, and power supply, so as to form a high-performance host capable of heterogeneous high-computing power, on-demand scalability of I/O and memory resources, and flexible resource scheduling and allocation. The entire system may flexibly provide multivariate computing power in various application scenarios. With the key components and devices being limited, using application requirements as orientations, the computing performance is improved by integrating system-level architecture key-technology innovations with multivariate computing power.

Through this embodiment, the plurality of multivariate computing modules are in plug-in connection with the host of the server system, and different multivariate computing modules are connected to each other via the cache coherence bus inside the server system, such that the adaptation capability between the multivariate computing modules and different computing platforms may be improved, and the convenience and reliability of data processing are simultaneously improved.

In some exemplary embodiments, similar to the foregoing embodiments, the data storage resource pool includes a memory resource pool and a storage resource pool, the memory resource pool comprises a set of shared memories, and the storage resource pool comprises a set of storage devices. The control module is further configured to dynamically allocate one or more shared memories of the set of shared memories in the memory resource pool and one or more storage devices of the set of storage devices in the storage resource pool to one or more multivariate computing resources among the plurality of multivariate computing resources in the multivariate computing resource pool.

For example, for the single-host multi-chip server system, through system decoupling design and standardized definition, the computing power of multi-platform multi-instruction set heterogeneous kernels of the data center is realized, the resources are flexibly allocated according to requirements, with unified system scheduling and management, thereby meeting diverse scenario requirements. Single-host multi-chip may serve as the standard for a computing power supply unit in the data center, and multivariate computing power is fully released from chip to system design, so as to support the sustainable expansion of a large-scale data center.

Through this embodiment, the memory resource and the storage resource are flexibly allocated by the control module according to requirements, such that diverse scenario requirements may be met.

In some exemplary embodiments, the server system further includes one or more memory controllers, a set of shared memories are connected to the one or more memory controllers, and each shared memory is only connected to one memory controller among the one or more memory controllers. In some embodiments, the set of shared memories may include a set of CXL memories, and the set of CXL memories are memories attached to the one or more memory controllers. Correspondingly, in the SM, the switching unit connected, via a CXL bus, to the memory controller to which the set of CXL memories belong is a CXL bus switching unit. A CXL memory pooling system is obtained by performing resource pooling on the set of CXL memories, and is built based on a CXL bus type network. Facing multi-scenario high-memory application requirements, the CXL memory pooling system decouples and reconfigures a server storage architecture by the internal CXL bus switching unit as a kernel, so as to realize memory resource recombination and asynchronous iteration, thereby maximizing the expansion of system memory. A high-level architecture of a CXL memory resource pool may be shown in Fig. 12.

In Fig. 12, a memory resource pool unit (i.e., the memory resource pool) is connected to the CXL bus switching unit via a CXL interconnect bus, the CXL bus switching unit is connected to the general computing unit via the CXL interconnect bus, and the general computing unit includes a CPU kernel and a private memory.

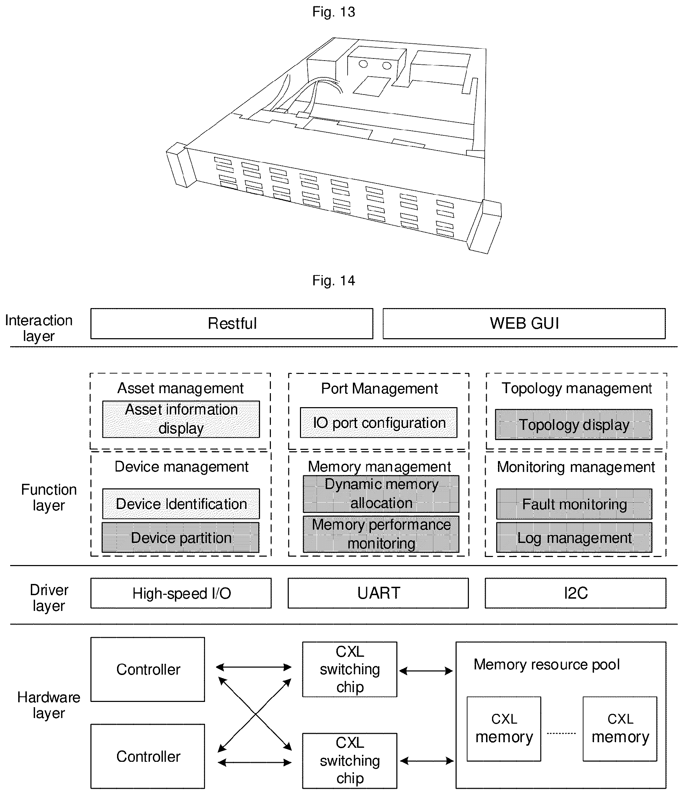

In some embodiments, the CXL memory pooling system is designed based on a CXL2.0 switch (switch, an example of the switching unit), thereby realizing the multi-host sharing and flexible resource allocation of the memory resource. A general computing module may be adapted to various platform servers. A CXL bus SM (as shown in Fig. 13) supports a CXL2.0 protocol, and externally provides 32 high-speed interfaces. Each high-speed interface may support 32GT/s and x16 bandwidths, and support any uplink/downlink configuration. A memory resource pool module (i.e., the memory module) may support the CXL2.0 protocol, and may externally expand 64 DDR 5Synchronous Dynamic Random Access Memory (DDR5) Registered Dual-Inline-Memory-Modules (RDIMM). All the units may be connected to each other via a CDFP (400 Gigabit Dual-Flex Parallel) high-speed cable.

Exemplarily, a set of specifications for the CXL bus SM may be as follows: 19-inch 2U standard case, depth: 700 mm; width: 435 mm; height: 87 mm, supporting L-shaped upper support rail rack; single CXL Switch with 256 lanes (logical channels), 16x16 ports, configurable for uplink or downlink, the entire system being able to support up to 2 CXL Switches, configurable as 16 uplink lanes and 16 downlink lanes; the system being able to provide 32 CDFP x16 ports, supporting CXL 2.0; the CPU module being used to perform in-band management while the baseboard management controller performing system management; supporting 2 Common Redundant Power Supplies (CRPS), with 1+1 redundancy; a fan supporting N+2 rotor redundancy, supporting hot swapping, and supporting power consumption monitoring; and external cable: CDFP Direct Attach Cable (DAC) cable interconnection.

In some embodiments, the set of the CXL memories are divided into a plurality of memory partitions, and one or more memory partitions of the plurality of memory partitions are configured to be allocated to one or more multivariate computing resources among the plurality of multivariate computing resources in the multivariate computing resource pool. The SM includes a set of CXL switching chips, and each of the plurality of multivariate computing resources in the multivariate computing resource pool is connected, via one or more CXL switch chips among the set of CXL switching chips by means of the cache coherence bus inside the server system, to at least one memory controller, to which one or more CXL memories among the set of CXL memories are attached, among the one or more memory controllers.

Herein, the memory resource in the memory resource pool may be managed by a memory resource management engine, and the memory resource management engine belongs to the control module or the management module. It is to be noted that, the control module or the management module may be one or more processor kernels on the server, which may be located on the baseboard management controller, or may also be independent of the baseboard management controller, regardless of their forms or variations, as long as they conform to the system architecture in this embodiment.

In the high-efficient CXL SM, the CXL switching chip achieves the resource decoupling of the memory pooling system, and the memory resource management engine performs unified management on the CXL switching chip and externally provides an interactive interface, such that CXL devices (CXL memories) in the memory resource pool may achieve unified management, so as to complete the identification, management, and dynamic allocation of the memory resource. An example of the overall technical solution of the memory resource management engine may be shown in Fig. 14. Referring to Fig. 14, the memory resource management engine may implement the following functions: memory resource identification and asset information display; and device partitioning and dynamic allocation information.

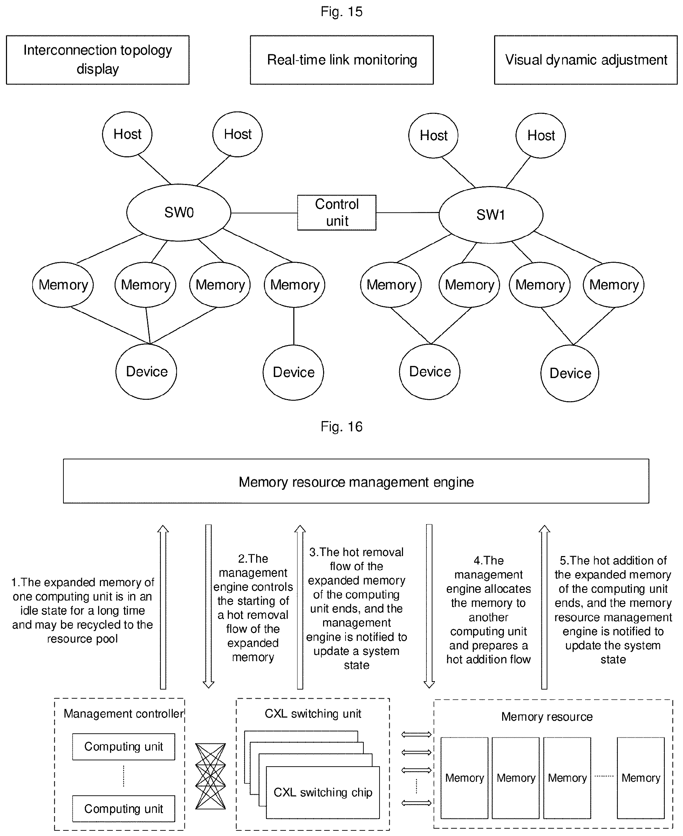

For the memory resource identification and asset information display, the memory resource management engine calls a dedicated communication protocol interface to acquire, from the CXL switching chip, all memory information to complete memory resource identification, and upper management software provides a network Application Programming Interface (API). The memory resource management engine not only provides the network API, but also provides a visual interface. A user accesses a management engine via a browser, so as to check memory resource list and system topology. The visual interface provides two display manners of list display and graphical display. The list display mainly includes: a device memory resource list (including device asset information, device partition information, a device memory allocation relationship, etc.), a computing unit list (including basic computing unit information, computing unit position information, a computing unit resource list, etc.), and a port resource list (e.g., a basic port attribute, port configuration information, reserved port resource information, etc.). Optional functions for the graphical display are shown in Fig. 15, and a graphical interface displays a connection relationship among a host, a switch, a memory, a device, and a control unit.

The memory resource mainly includes manufacturer information of a memory, a device type, device partition information, and an allocation state of the memory resource. The port resource list portion mainly includes a basic port attribute, reserved port resource state, and a portion allocation relationship. The memory resource management engine acquires and displays information of the memory controller, mainly including: a position in which the memory controller is located; a memory resource state allocated by the memory controller; and a health state of a device link of the memory controller. The management engine provides graphical display and management of the memory resource via a WEB Graphical User Interface (GUI), such that the user may complete the dynamic allocation of the resources in a network topology view through actions such as dragging, etc., while the device link is monitored in real time.

For the device partitioning and dynamic allocation information, the memory resource management engine is connected to each memory controller via a network, so as to be interconnected to a resource management controller on each memory controller. Resource management software on each memory controller is responsible for monitoring the use state of the memory resource of the current memory controller, and the memory resource management system engine is responsible for monitoring and scheduling the memory resource of the entire system, as shown in Fig. 16.

Exemplarily, referring to Fig. 16, the expand memory of one computing unit (the general computing unit or the heterogeneous computing unit) is in an idle state for a long time and may be recycled to the resource pool, and the memory resource management engine starts a hot removal flow of the expanded memory. The hot removal flow of the expanded memory of the computing unit ends, and the management engine is notified to update a system state; the memory resource management engine allocates the memory to another computing unit (the general computing unit or the heterogeneous computing unit) and prepares a hot addition flow; and the hot addition of the expanded memory of the computing unit ends, and the memory resource management engine is notified to update the system state.

The device partition information is the division state of the memory resource. One memory controller may be mounted with a plurality of memories, and all the memory resources under the same memory controller may be arbitrarily divided into a plurality of sections, that is, different memory banks mounted in the same memory controller in the system may be allocated to the same or different computing units. The division state of the memories may be sensed and monitored by a resource management system, and the resource management system provides visual interaction for adjusting device partitions.

The dynamic allocation of the memory resource means that the memory resource management engine may dynamically migrate the memory from one computing unit to another computing unit, the entire operating system remains online, restarting of the computing unit does not affect a service that is running, and the whole flow may be monitored in real time on the WEB interface of the management engine. The above function is based on the basic hot-swapping attribute of the CXL device, without additional memory function supports.

Through this embodiment, by the CXL memory (CXL device) mounted in the memory controller, the multivariate computing resource in the multivariate computing resource pool is connected, via the set of CXL switching chips by means of the cache coherence bus inside the server system, to the memory controller to which the set of CXL memories belong, such that the control convenience of the CXL memory may be improved.

In some exemplary embodiments, the server system further includes a management module. The management module is configured to perform at least one of following managements on the server system: device management, in-band management, out-of-band management, safety management, where the management module and the control module are the same module or different modules. The management module may be the foregoing UMM, which may be the same module as the control module, or may also be a different module.

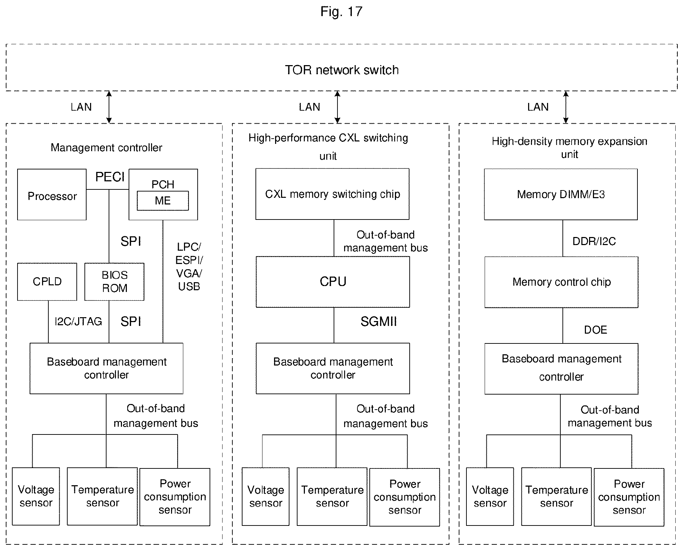

Herein, the management module may belong to a management control system. The management control system is mainly responsible for the management control of the entire system. From a management perspective, a baseboard controller with a high-performance CXL switching unit serves as the kernel. Centralized management control of the entire system is realized by a network management controller and the baseboard controller in a high-density memory expansion unit. A management control system architecture is shown in Fig. 17. The management control system includes a Top of Rack (TOR) network switch, a management controller, the high-performance CXL switching unit, and the high-density memory expansion unit, which are connected via a Local Area Network (LAN).

The management controller may include: a processor, a Platform Controller Hub (PCH) Management Engine (ME), a Complex Programmable Logic Device (CPLD), a Basic Input/Output System (BIOS) Read-Only Memory (ROM), and a baseboard management controller. The processor is connected to the PCH ME via a Platform Environment Control Interface (PECI) bus, the BIOS ROM is connected to the baseboard management controller via a Serial Peripheral Interface (SPI) bus, the CPLD is connected to the baseboard management controller via an Inter-Integrated Circuit (I2C) buts or a Joint Test Action Group (JTAG), and the PCH ME is connected to the baseboard management controller via a Low Pin Count (LPC), Enhanced Serial Peripheral Interface (ESPI), a Video Graphics Array (VGA), or a Universal Serial Bus (USB).

The high-performance CXL switching unit may include a CXL memory switching chip, a CPU, and a baseboard management controller. The CXL memory switching chip is connected to the CPU via an out-of-band management bus, and the CPU is connected to the baseboard management controller via a Serial Gigabit Media Independent Interface (SGMII).

The high-density memory expansion unit may include a memory Dual In-line Memory Module (DIMM)/(Error Checking and Correcting (ECC)) E 3, a memory control chip, and a baseboard management controller. The DIMM/E 3 is connected to the memory control chip via a DDR or an I2C bus, and the memory control chip is connected to the baseboard management controller via a dedicated Data Object Exchange (DOE) command interface of the I2C bus.

The baseboard management controllers of the management controller, high-performance CXL switching unit, and high-density memory expansion unit all may be connected to a voltage sensor, a temperature sensor, a power consumption sensor, or other sensors via the out-of-band management bus.

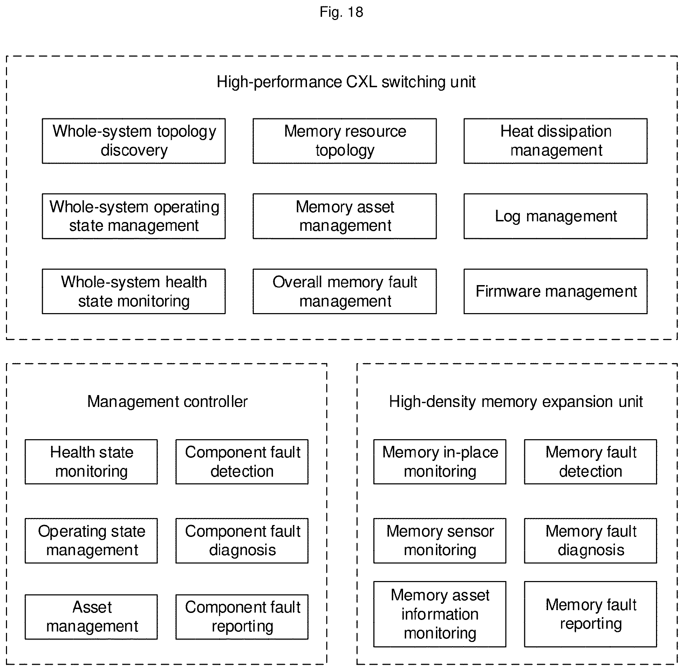

The management control system mainly includes functional modules such as a node management module, a memory monitoring management module, a fault diagnosis module, etc. A software architecture is shown in Fig. 18. Functions owned by the management controller include health state monitoring, component fault detection, operating state management, component fault diagnosis, asset management, component fault reporting, etc. Functions owned by the high-performance CXL switching unit include whole-system topology discovery, memory resource topology, heat dissipation management, whole-system operating state management, memory asset management, log management, whole-system health state monitoring, overall memory fault management, firmware management, etc. Functions owned by the high-density memory expansion unit include memory in-place monitoring, memory fault detection, memory sensor monitoring, memory fault diagnosis, memory asset information monitoring, memory fault reporting, etc.

For node management, under an entire framework of a memory pooling storage server system, the management modules are connected to each other via Ethernet, and the baseboard management controller of the high-performance CXL SM collectively monitors an upstream controller and a downstream memory expansion unit, so as to achieve whole-system topology discovery, node operating state, and whole-system health state monitoring.

For memory monitoring management, the baseboard management controller sends the dedicated DOE command interface to the memory controller via the out-of-band management bus to acquire the in-place, asset information, sensor, and fault diagnosis information of each memory, so as to form the overall resource topology of the pooled memory. A visual page is designed to intensively display a resource state of the entire memory pool, including monitoring states and resource allocation utilization of all the memories.

For pooled memory fault diagnosis, different from a traditional local memory, the expanded memory is decoupled to the host by the CXL memory controller. The CXL memory controller learns ECC-based memory error correction information as a master control unit for memory reading and writing. The baseboard controller establishes a dedicated DOE communication protocol with the CXL memory controller, so as to collect memory fault information, thereby realizing accurate fault detection at a memory bank level.

Through this embodiment, separating management, safety, and control functions from the computing unit may achieve compatibility with different computing power platforms and management platforms, thereby improving the compatibility of the multivariate computing module.

In some exemplary embodiments, similar to the foregoing embodiments, the server system further includes: an IODM, connected to the multivariate computing resource pool via the SM by means of the cache coherence bus inside the server system; a heat dissipation module, configured to perform heat dissipation on at least part of devices in the server system; a power supply module, configured to supply power to the server system; and a network module, configured to establish a network connection for the server system. Those that have already been described are not described herein again.

In some embodiments, the management module supports a plurality of sets of interfaces to manage different modules. Correspondingly, the plurality of multivariate computing resources, in the multivariate computing resource pool, the shared memories in the memory resource pool, the storage devices in the storage resource pool, the SM, the IODM, the heat dissipation module, the power supply module, and the network module are respectively connected to corresponding interfaces of the management module via at least one of the following buses: a System Management Bus (SMBUS), a Power Management Bus (PMBUS), a PCIe bus, a CXL bus, a Universal Asynchronous Receiver/Transmitter (UART) bus, an I2C bus, a Serial Peripheral Interface (SPI) bus.

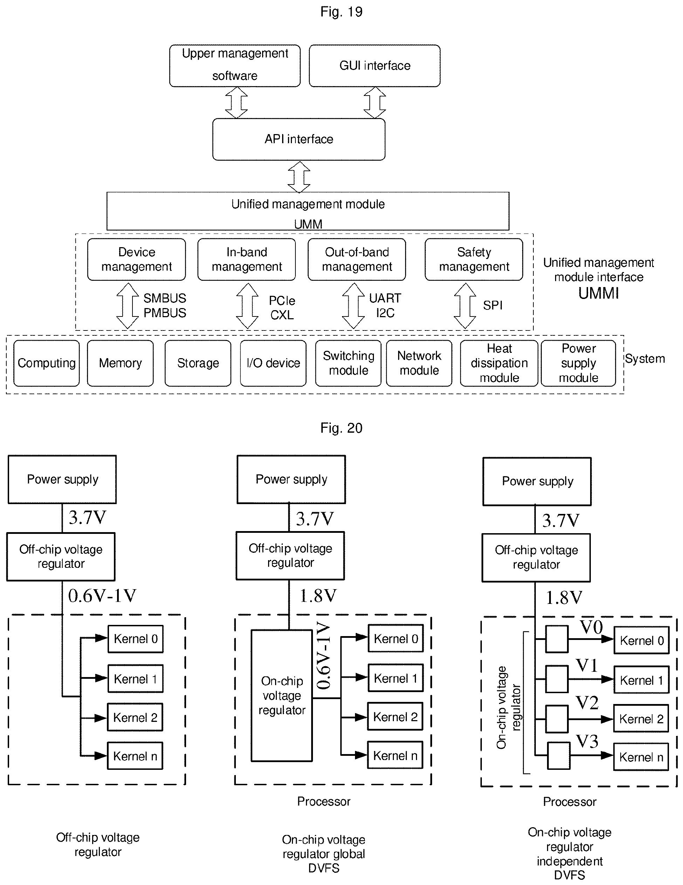

For example, in a management aspect, as shown in Fig. 19, the single-host multi-chip system design may perform decoupling of the computing unit and the management module, perform standardized definition, and separate the management, safety, and control functions from the computing unit. In this way, the system may be compatible with different computing power units and management platforms, and support the plurality of sets of interfaces to perform unified management of the plurality of chips, thereby meeting different application scenario requirements. Each module may be connected to the UMM via at least one of the following buses: the SMBUS, the PMBUS, the PCIe bus, the CXL bus, the UART bus, the I2C bus, the SPI bus.

Through this embodiment, the management module supports the plurality of sets of interfaces to manage different modules (i.e., supporting the plurality of sets of interfaces to perform unified management of the plurality of chips), such that different application scenario requirements may be met.

In some exemplary embodiments, the management module may be configured to execute various management functions, which may include, but is not limited to at least one of the following: topology identification is performed on the server system to obtain system topology information of the server system, where the system topology information includes node reference information of system nodes in the server system, the system nodes in the server system corresponds to system devices in the server system, and the node reference information includes at least one of the following: a node type, a power-up state, or a health state; manage device asset information of the system devices of the server system; perform power-on and power-off control on the system devices of the server system to control the system devices of the server system to power on in a preset sequence and power off in a preset sequence; and during the process of powering on the server system or restarting a host of the server system, automatically detect a reset signal to achieve system reset.

Herein, the management module may achieve computing power allocation and management, and the voltage regulation and power consumption management of the MPPM, thereby ensuring the high-efficient design of the system; may achieve monitoring of resource utilization, I/O throughput, and the health state of the resource, and achieve coordinative powering up and down and centralized management of resources and topology, thereby ensuring the availability of the system; and may achieve rapid on-demand deployment and automatic management of the hardware resource, key resource information monitoring and fault management, and intelligent fault localization and recovery, thereby ensuring the reliability of the computing system.

For power consumption management, a dynamic voltage frequency scaling (DVFS) technology based on voltage and frequency scaling has become the mainstream in power consumption management design for processors and systems thereof. The basic operating principle of DVFS is to determine different requirements for the computing capability by monitoring the workload of the processor, dynamically adjust an operating voltage and frequency of each module in each processor according to a preset control strategy, and reduce the voltage and frequency while ensuring performance, thereby achieving the purpose of reducing processor power consumption.

Fig. 20 shows three DVFS voltage regulation manners for multi-kernel processors, which respectively are off-chip regulation, on-chip global regulation, and on-chip independent control regulation. The off-chip regulation technology has high power supply conversion efficiency, and long stabilization time, typically lasting tens of microseconds, but has low regulation efficiency. On-chip regulation may reduce voltage stabilization time to tens to hundreds of nanoseconds. However, on-chip regulation needs to integrate a voltage regulation module inside the processor, increasing a chip area, thus increasing design complexity. As the number of the multi-kernel processor kernels increases and a heterogeneous kernel integration technology develops, the significant chip area overhead and increasing design complexity resulting from independent control of each kernel have led to the introduction of partitioned control regulation technology on the basis of both independent control and full control. Partitioned control regulation is to divide the inside of the multi-kernel processor into a plurality of regions, and the same voltage and frequency regulation strategy is executed in each region, so as to achieve the balancing of design overhead and power consumption.

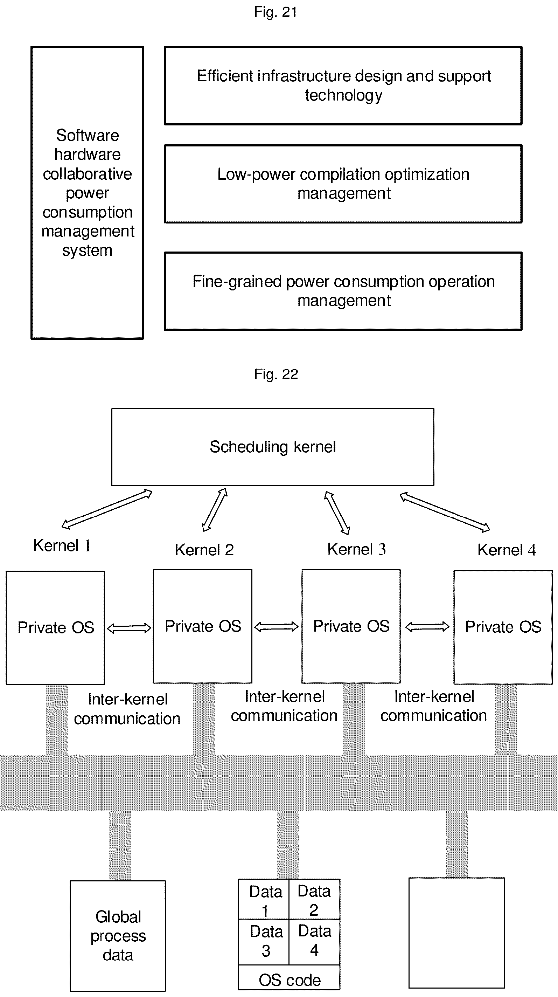

For system-level power consumption management, a multi-level power consumption management mechanism is typically established through a software-hardware collaboration method, as shown in Fig. 21. System-level multi-level power consumption management may be classified into an efficient infrastructure design and support technology, a low-power compilation technology, and fine-grained power consumption operation management. The efficient infrastructure design and support technology means that, at a system-level hardware level, in addition to deployment of power-saving technologies such as DVFS in each processor chip, a power-saving design for power supply and heat dissipation modules is also required from a holistic perspective of system power consumption, causing the system to always operate at high conversion efficiency, thereby achieving efficient electrical power conversion and effective heat dissipation. Low-power compilation optimization management is to perform power consumption optimization at a bottom operating level of the processor, and reduce energy consumption for instruction fetch and decoding by optimizing the compiling of instructions. Fine-grained power consumption operation management is to use, from the software level, the fine-grained resource allocation, release, and loading mechanism of the operating system to sense the operating state of each computing unit, so as to control an idle computing unit to enter a sleep mode, and control the computing unit to switch to the operating state during use, thereby realizing power consumption control.

The management module of the single-host multi-chip system may be responsible for unified management operations, and externally provide operations and maintenance capabilities via a standardized service interface, thereby achieving integrated monitoring, early warning for faults, visual management, etc. An integration management architecture of the single-host multi-chip system is shown in Fig. 16. Its functions may include, but are not limited to, at least one of the following: topology identification, supporting for topology view check, and being able to check node summary information such as a node type, a power-up state, an overall health state, etc.; asset information management, supporting for device information check level by level, being able to check device details through a World Wide Web (Web)/Redfish page, such as device asset information, a high-speed interface connection state, etc.; collaborative control, supporting for centralized power-up/power-down control, and each unit being powered up/down in sequence; supporting for a system reset function, automatically detecting the reset signal for reset during power-up and host restarting; and supporting for reset control after re-allocation of resources, etc.

Through this embodiment, the management module performs topology identification, asset information management, collaborative control, etc., such that the management capability of the management module to the server system may be improved, thereby improving the controllability of the system.

In some exemplary embodiments, the operating system of the server system includes a plurality of operating system kernels; each operating system kernel among the plurality of operating system kernels corresponds to a corresponding multivariate computing resource among the plurality of multivariate computing resources in the multivariate computing resource pool; each operating system kernel among the plurality of operating system kernels is compiled and run under a corresponding ISA instruction set; the server system is configured to perform computing power scheduling on a running application in the operating system of the server system by using specified system software.

In order to fully achieve heterogeneous multi-kernel performance to adapt to various application scenarios, it needs to ensure that the application may be freely migrated between the plurality of kernels. However, application migration between heterogeneous multi-kernel systems with different instruction sets is the problem to be solved. Load migration and resource scheduling are applied in the following scenarios: the operating system performs load balancing, and progresses are migrated to a static or lightly loaded kernel; according to different loading types, loads are migrated to kernels of different ISAs; a power consumption state changes, requiring the migration of certain progresses to achieve power consumption management; and when a kernel overheats, the progress is migrated to another kernel.

In this embodiment, the operating system of the server system (which may be the operating system on the baseboard management controller) includes a plurality of operating system kernels; each operating system kernel among the plurality of operating system kernels corresponds to a corresponding multivariate computing resource among the plurality of multivariate computing resources in the multivariate computing resource pool and each operating system kernel among the plurality of operating system kernels is compiled and run under a corresponding ISA instruction set. The server system is configured to perform computing power scheduling on a running application in the operating system of the server system by using specified system software; and the computing power scheduled by the designated system software is one or more multivariate computing resources among the plurality of multivariate computing resources in the multivariate computing resource pool. Herein, the entire system achieves on-demand balanced scheduling of computing power for applications through unified system software, such that the difficulty of migrating applications on kernels with different ISAs may be reduced, and the possibility of migrating the applications on the kernels with different ISAs is increased.

For example, for the single-host multi-chip system, the operating system includes a plurality of kernels, each kernel is compiled and run under a specific ISA instruction set, and the entire system achieves on-demand balanced scheduling of computing power for applications through unified system software.

Through this embodiment, the server system achieves on-demand balanced scheduling of computing power for applications through unified system software, such that the rationality of computing power scheduling may be ensured, and the possibility of migrating the applications on the kernels with different ISAs is increased.

In some exemplary embodiments, the server system further includes a scheduling kernel. The specified system software is configured to perform computing power scheduling on the running application in the operating system of the server system by using a scheduling system on the scheduling kernel; an operating system on each operating system kernel among the plurality of operating system kernels is a private operating systems; the plurality of operating system kernels are connected to each other via an inter-kernel communication bus; and the inter-kernel communication bus is configured to perform an inter-kernel communication among the plurality of operating system kernels.

In this embodiment, at the operating system level, a collaborative communication between the kernels of the plurality of operating systems is achieved. In this way, the entire system still has a global state under different ISA kernel running examples. Through a unified scheduling kernel and the application of responsive scheduling techniques, guarantees may be provided for application migration between heterogeneous multi-kernel systems with different instruction sets.

For example, referring to Fig. 22, the collaborative communication between the kernels is realized at the operating system level. In this way, the entire system, including different private Operating Systems (Oses), still has a global state under different ISA kernel running examples. The global memory allows a plurality of computing kernels to access and share data. Each computing kernel may have its own private memory. Based on this, through the unified scheduling kernels and advanced scheduling techniques, an application program remains unaware of bottom hardware. Through the cooperation of the operating system and the scheduling system, the application may automatically select optimal mapping, thereby improving the performance of the multi-instruction set heterogeneous multi-kernel system.

Through this embodiment, computing power scheduling is performed by the unified scheduling kernels based on the application, such that the rationality and timeliness of computing power scheduling may be improved, and guarantees are provided for application migration between heterogeneous multi-kernel systems with different instruction sets.

In some exemplary embodiments, in the single-host multi-chip system design, the discovery, management, and flexible adjustment of system resources are critical. As a kernel management unit for dynamic resource adjustment, the control module controls the high-performance switching unit to achieve automatic resource topology discovery and flexible automatic resource switching. Optional functions are as follows: resource identification and display, providing a network interface and a visual Web interface to perform resource list and topology display, including heterogeneous computing resource unit information, I/O port information, etc.; dynamic resource allocation, dynamic allocation and adjustment of heterogeneous computing units at a millisecond level being realized through technologies such as the hot removal, hot insertion, hot reset, etc. of devices; load balancing, physical resources being dynamically balanced and allocated based on an optimized scheduling algorithm for load balancing, so as to realize on-demand allocation of fine-grained storage resources, thereby maximizing the releasing of heterogeneous computing power; and an expert template, expert template description and dynamic interface switching of a heterogeneous computing power resource being realized according to parameters such as service requirements, resource states, performance indicators, etc., such that the application may apply for a resource based on the expert template, and simultaneously realizing a visual application of the expert template by providing the network interface and the visual Web interface. Herein, the expert template describes the rule of resource switching, that is, how many resources to allocate under what circumstances, so as to define the rule in advance; and the dynamic interface switching means that, after a scenario changes, the system may perform dynamic interface switching according to the expert template.

In some embodiments, the control module is further configured to: receive a resource dynamic scheduling request sent by a resource scheduling request party, where the resource scheduling request party is a general computing unit among the set of general computing units in the multivariate computing resource pool, the resource dynamic scheduling request is configured to request scheduling of a system resource of a specified resource type, and the system resource of the specified resource type is at least one of the following: a heterogeneous computing unit among the set of heterogeneous computing units in the multivariate computing resource pool, or a data storage resource in the data storage resource pool; and in response to the received resource dynamic scheduling request, adjust the resource state of a target system resource, where a resource type of the target system resource is the specified resource type.

In this embodiment, the control module may schedule the system resource of the server system based on the received resource dynamic scheduling request. Correspondingly, the control module is further configured to receive the resource dynamic scheduling request sent by the resource scheduling request party. The resource scheduling request party is a general computing unit among the set of general computing units in the multivariate computing resource pool, the resource dynamic scheduling request is configured to request scheduling of a system resource of a specified resource type, and the system resource of the specified resource type is at least one of the following: the heterogeneous computing unit among the set of heterogeneous computing units in the multivariate computing resource pool, or the data storage resource in the data storage resource pool. If the resource dynamic scheduling request is configured to request adjustment of the resource state of the specified system resource, the resource dynamic scheduling request may carry resource information of the specified system resource (e.g., releasing the specified system resource); and if the resource dynamic scheduling request is configured to request not adjustment of the resource state of the specified system resource, the resource dynamic scheduling request may carry type information of a specified resource type (e.g., request allocation of the heterogeneous computing unit). Herein, there may be various resource states of the system resource in the server system, such as an idle state, an occupied state, etc.

In some embodiments, the control module is further configured to, in response to the received resource dynamic scheduling request, adjust the resource state of a target system resource, where a resource type of the target system resource is the specified resource type. Similar to the foregoing embodiments, the target system resource may be the specific system resource specified in the resource dynamic scheduling request, or may also be a system resource determined based on the specified resource type after receiving the resource dynamic scheduling request.

Through this embodiment, the resource state of the system resource of the specified resource type is adjusted by the control module based on the received resource dynamic scheduling request, such that the convenience of scheduling the system resource may be improved.

In some exemplary embodiments, the resource dynamic scheduling request is a resource allocation request, and the resource allocation request is configured to request allocation of the system resource of the specified resource type for the resource scheduling request party. In addition to indicating the specified resource type, the amount of the requested system resource and other requirements that the system resource needs to meet may also be indicated.

Correspondingly, the control module is further configured to, in response to the received resource allocation request, determine, from one or more system resources of the specified resource type that are not allocated by the server system, a system resource to be allocated to the resource scheduling request party, so as to obtain the target system resource, and allocate the target system resource to the resource scheduling request party. Herein, the resource state of the unallocated system resource may be the idle state, and the resource state of the allocated system resource may be the occupied state.

Through this embodiment, the convenience of allocating the system resource may be improved in response to the received resource allocation request being the system resource of the specified resource type allocated by a general computing node.

In some exemplary embodiments, the control module is further configured to send a resource configuration request to the SM, so as to configure, in the SM, an association relationship between the resource scheduling request party and the target system resource.

In this embodiment, the general computing unit in the multivariate computing resource pool is connected to the data storage resource in the data storage resource pool and the heterogeneous computing unit in the multivariate computing resource pool via the SM. The SM stores an association relationship between the connected general computing unit and the system resource allocated to the general computing unit. Storing the above association relationship in the SM may facilitate data forwarding, and also facilitate the network topology construction of the management module.

In order to ensure the timeliness and accuracy of the association relationship stored by the SM, the control module is further configured to send, in a case where the target system resource is allocated to the resource scheduling request party, a resource configuration request to the SM, so as to configure, in the SM, an association relationship between the resource scheduling request party and the target system resource.

Through this embodiment, the control module configures the corresponding association relationship on the SM based on the allocated system resource, such that the timeliness and accuracy of information configuration may be improved.

In some exemplary embodiments, the resource dynamic scheduling request may be a resource release request, and the resource release request is configured to request releasing of the target system resource allocated to the resource scheduling request party. The resource release request may carry the resource information of the target system resource such that the control module determines the target system resource to be released. The resource information of the target system resource may be a resource identifier of the target system resource, or may also be information that may identify the target system resource.

Correspondingly, the control module is further configured to, in response to the received resource release request, send a resource position acquisition request to the SM, so as to acquire a physical resource position of the target system resource. Herein, the SM may determine the physical resource position of the target system resource based on the system resource connected to the port or other information, and return the physical resource position of the target system resource to the control module.

The control module is further configured to send a reset signal to the target system resource according to the acquired physical resource position, so as to reset the target system resource. Herein, resetting the target system resource may include disconnecting the association relationship with the resource scheduling request party, or may also include requesting other invalid information (i.e., information related to the resource scheduling request party and irrelevant to subsequent resource allocation).

Through this embodiment, the physical resource position of the system resource to be released is acquired through the interaction with the SM, and resource releasing is performed based on the acquired physical resource position, such that the accuracy of resource releasing may be improved.

In some exemplary embodiments, the target system resource is further configured to, in response to the received reset signal, execute a reset operation after one or more processes running on the target system resource end, and after reset is completed, send, to the control module, an indication message for indicating reset completion of the target system resource.

In this embodiment, for the target system resource, after the reset signal is received, the reset operation may be directly executed. In this case, if there is a running progress, the execution of the reset operation may lead to interruption of the running progress, thus resulting in a system error.

In order to improve the safety and reliability of system running, the target system resource may execute the reset operation after the progress running on the target system resource ends, and after reset is completed, send, to the control module, an indication message for indicating reset completion of the target system resource. The reset target system resource may be re-allocated to other computing units.

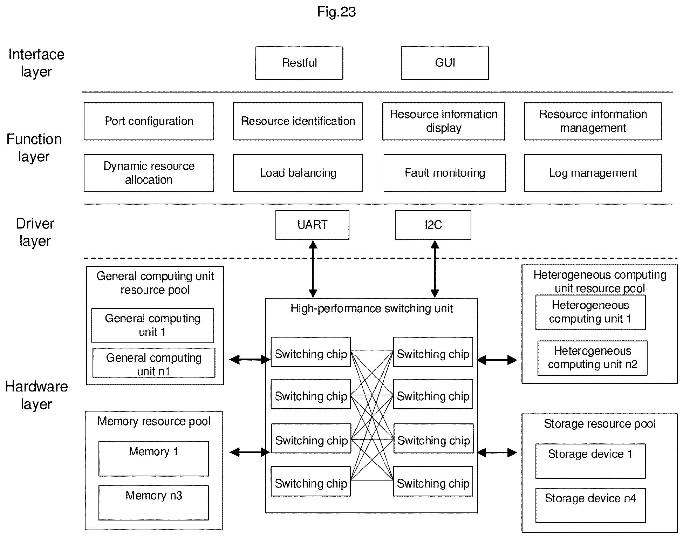

For example, for the single-host multi-chip system, the SM is a key infrastructure for connecting the multivariate computing module and the system resource pool. The system realizes automatic resource topology discovery and flexible resource scheduling through the high-performance switching unit, and provides the standard interface to a data center monitoring management platform (the monitoring management platform is a data center-level management platform that is higher than the foregoing management platform), so as to achieve centralized resource scheduling and management. The overall software and hardware design solution for system resource scheduling is shown in Fig. 23. Benefiting from the powerful resource expansion capabilities of the high-performance switching unit (the capability of the SM is expandable), by using the high-performance switching unit as the kernel, the identification of multivariate computing power units and devices and the display of topology information and asset information in the single-host multi-chip system server system are realized.

Referring to Fig. 23, the single-host multi-chip system may include an interface layer, a function layer, a drive layer, and a hardware layer. At the hardware layer, the multivariate computing resource pool includes a general computing unit resource pool (i.e., the general computing resource pool) and a heterogeneous computing unit resource pool (i.e., the heterogeneous computing resource pool). The general computing unit resource pool includes general computing units 1 to n1, and the heterogeneous computing unit resource pool includes heterogeneous computing units 1 to n2. The data storage resource pool includes a memory resource pool and a storage resource pool (i.e., a storage device resource pool), the memory resource pool includes a memory 1 to a memory n3, and the storage resource pool includes a storage device 1 to a storage device n4. The general computing unit resource pool, the heterogeneous computing unit resource pool, the memory resource pool, and the storage resource pool are connected to each other via the switching units (the high-performance switching units).

The switching unit is connected to the function layer via various interfaces of the drive layer, and the various interfaces may include, but are not limited to, a UART bus and an I2C bus. The function layer may have at least one of the following functions: port configuration, resource identification, resource information display, resource information management, dynamic resource allocation, load balancing, fault monitoring, or log management. The interface layer may be connected to upper management software, a GUI interface, etc. via API interfaces such as Representational State Transfer (Restful), the GUI, etc.

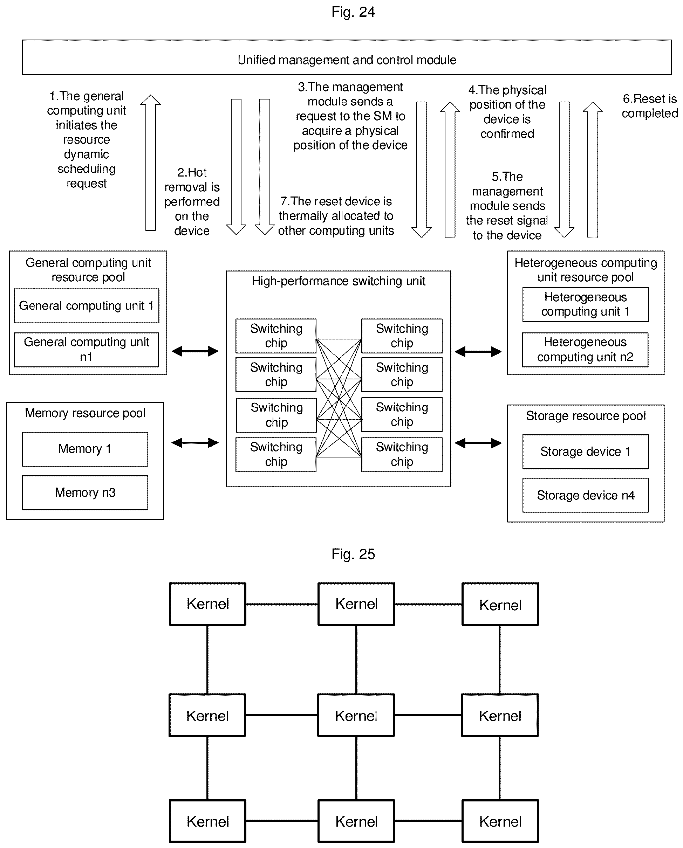

Herein, a system resource scheduling and allocation flow is shown in Fig. 24. Operations such as on-demand allocation, dynamic scaling, and resource release for general, heterogeneous, and MPPMs and system resources are implemented via the system management interface. The user may match the system resource and computing power according to load requirements, or call heterogeneous computing power to match with general computing power. When an application stops, the user may release a resource to the resource pool (e.g., sending instructions via the Restful interface or GUI interface, and the system performs releasing), facilitating efficient circulation and full utilization of the resources.

Referring to Fig. 24, the general computing unit may initiate the resource dynamic scheduling request, for example, releasing a heterogeneous computing unit or other system devices, and allocate them to other computing units, thereby ensuring that progresses related to the device end. The unified management and control modules perform hot removal on the device in response to the received resource dynamic scheduling request. Furthermore, the management module sends a request to the SM to acquire a physical position of the device, thereby determining the physical position of the device. The management unit sends the reset signal to the device, and the device is reset and sends the reset completion indication to the management module. The management module may thermally allocate the reset device to other computing units.

Through this embodiment, the system resource to be released is reset after the progress running on the system resource ends, such that the safety and reliability of system running may be ensured.

In some exemplary embodiments, an interconnection topology structure between the multivariate computing resources in the multivariate computing resource pool may be configured according to requirements. For example, an interconnection network architecture of the MPPM of the single-host multi-chip system may use a Bus structure or a crossbar bus structure when there are few multivariate computing resources, and may select a Mesh (mesh structure) structure when there are more multivariate computing resources or the scalability in the later stage of the architecture is taken into consideration, that is, the interconnection topology structure between the multivariate computing resources in the multivariate computing resource pool is the mesh structure. There may be one or more mesh structures used by the interconnection topology structure between the multivariate computing resources in the multivariate computing resource pool. The mesh structure may include, but is not limited to, at least one of the following: a two-dimensional mesh structure, or a three-dimensional mesh structure.

As an optional implementation, the mesh structure used by the interconnection topology structure between the multivariate computing resources in the multivariate computing resource pool may be the two-dimensional mesh structure (two-dimensional Mesh structure) such as a cross mesh structure, nodes of the cross mesh structure are the plurality of multivariate computing resources (e.g., processor kernel) in the multivariate computing resource pool, and a node of the cross mesh structure is exclusively connected to one or more adjacent nodes at the same row or the same column.

For example, in the cross mesh structure, a node representing the processor kernel is only connected to the adjacent nodes at the same row or the same column. This method is simple in topology, good in scalability, and convenient in path finding, and is an optional on-chip interconnection network structure. Exemplarily, the Mesh network structure is shown in Fig. 25, and the processor kernel is located at a network cross node.

As another optional implementation, the mesh structure used by the interconnection topology structure between the multivariate computing resources in the multivariate computing resource pool may be the three-dimensional mesh structure, nodes of the three-dimensional mesh structure are the plurality of multivariate computing resources in the multivariate computing resource pool, and a node of the three-dimensional mesh structure is exclusively connected to one or more adjacent nodes in the horizontal or vertical direction.

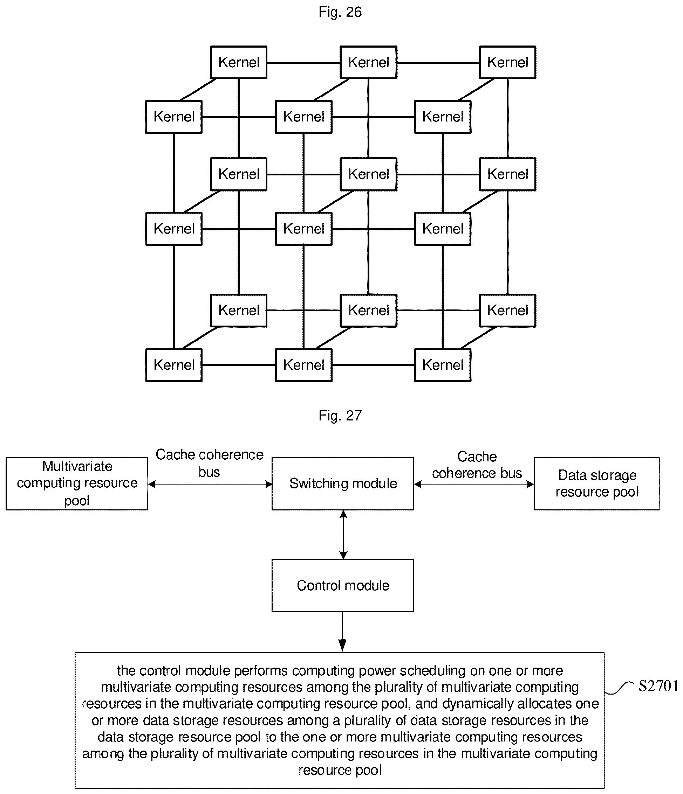

Herein, when there are more processor kernels, a communication path between the processor kernels at the edge of the above two-dimensional Mesh structure (such as the above cross network structure) is relatively long, leading to substantially increased transmission delay. In order to reduce transmission delay between distant processor kernel nodes in the two-dimensional Mesh structure, the three-dimensional Mesh structure may be extended on the basis of the two-dimensional Mesh structure, as shown in Fig. 26. The three-dimensional Mesh structure, or even higher-dimensional mesh structures, may significantly reduce the network diameter of the mesh structure, and decrease transmission delay.

Through this embodiment, the interconnection topology structure between the multivariate computing resources in the multivariate computing resource pool uses the two-dimensional mesh structure, such that the simplicity and scalability of network topology may be improved; and the interconnection topology structure between the multivariate computing resources in the multivariate computing resource pool uses the three-dimensional mesh structure, such that the network diameter of the mesh structure may be reduced, and the transmission delay may be decreased.

It is to be noted that, each of the above modules may be implemented by software or hardware. For the latter, it may be implemented in the following manners, but is not limited to the follow: the above modules are all located in a same processor; or the above modules are located in different processors in any combination.

According to another aspect in this embodiment, a method for scheduling a resource of a server system that is performed by the server system in the foregoing embodiments is further provided. The server system is configured to implement the above embodiments and optional implementations, and what has been described will not be described again. As used below, the term "module" may be a combination of software and/or hardware that implements a predetermined function. Although the apparatus described in the following embodiments is preferably implemented in software, but implementations in hardware, or a combination of software and hardware, are also possible and conceived.

Fig. 27 is a schematic flowchart of an optional method for scheduling a resource of a server system according to an embodiment of the present disclosure. As shown in Fig. 27, the flow includes the following step. At S2701, the control module performs computing power scheduling on one or more multivariate computing resources among the plurality of multivariate computing resources in the multivariate computing resource pool, and dynamically allocates one or more data storage resources among a plurality of data storage resources in the data storage resource pool to the one or more multivariate computing resources among the plurality of multivariate computing resources in the multivariate computing resource pool. The manner of the server system to execute the above step by the control module may be referenced from the foregoing embodiments, and is not described herein again.

Through the above step, the control module obtained through modularization performs computing power scheduling on the multivariate computing resource in the multivariate computing resource pool, and dynamically allocates the data storage resource in the data storage resource pool to the multivariate computing resource in the multivariate computing resource pool. Therefore, the problem of poor scalability of computing power of multivariate computing power integration solutions in the related art is solved, and the scalability of computing power is improved.

In some exemplary embodiments, the performing, by the control module, computing power scheduling on one or more multivariate computing resources among the plurality of multivariate computing resources in the multivariate computing resource pool, and dynamically allocating one or more data storage resources among a plurality of data storage resources in the data storage resource pool to the one or more multivariate computing resources among the plurality of multivariate computing resources in the multivariate computing resource pool includes: the control module receives a resource dynamic scheduling request sent by a resource scheduling request party, where the resource scheduling request party is a general computing unit among the set of general computing units in the general computing resource pool or a heterogeneous computing unit among the set of heterogeneous computing units in the heterogeneous computing resource pool, the resource dynamic scheduling request is configured to request scheduling of a system resource of a specified resource type, and the system resource of the specified resource type is at least one of the following: a general computing unit among the set of general computing units in the general computing resource pool, a heterogeneous computing unit among the set of heterogeneous computing units in the heterogeneous computing resource pool, or a data storage resource in the data storage resource pool; and in response to the received resource dynamic scheduling request, a target system resource is scheduled by the control module, where a resource type of the target system resource is the specified resource type.

In this embodiment, that the control module schedules the multivariate computing resource and the data storage resource may be implemented based on the resource dynamic scheduling request of the multivariate computing resource (e.g., the general computing unit) in the multivariate computing resource pool. The resource dynamic scheduling request may be a resource allocation request, a resource release request, or other requests that may implement at least one of the multivariate computing resource or the data storage resource.

The manner of the control module to schedule the target system resource in response to the received resource dynamic scheduling request is similar to that in the foregoing embodiments. The process flow when the resource dynamic scheduling request is the resource allocation request or the resource release request is similar to that in the foregoing embodiments. Details are not described herein.

Through this embodiment, the resource state of the system resource of the specified resource type is adjusted by the control module based on the received resource dynamic scheduling request, such that the convenience of scheduling the system resource may be improved.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present disclosure substantially or parts making contributions to the related art may be embodied in form of software product, and the computer software product is stored in a storage medium (for example, a ROM/RAM), a magnetic disk and an optical disk). The storage medium may be a non-volatile storage medium, which includes a plurality of instructions configured to enable a terminal device (which may be a mobile phone, a computer, a server, a network device, or the like) to execute the method in each embodiment of the present disclosure.

According to yet another aspect of this embodiment, a chip is further provided. The chip may be configured to implement the foregoing server system such as the foregoing single-host multi-chip system, and what has been described will not be described again.

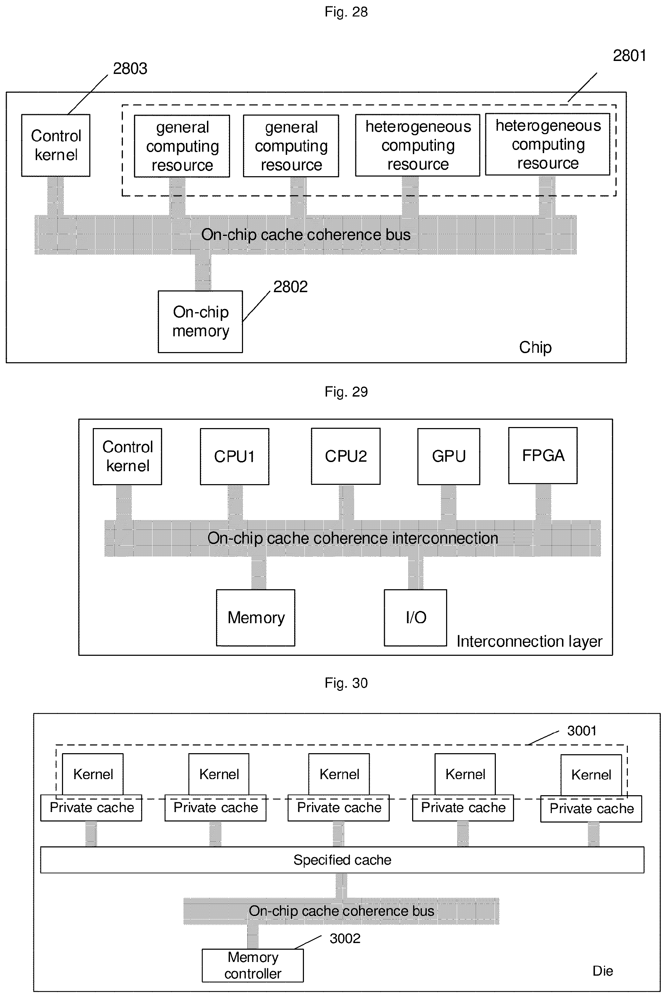

Fig. 28 is a structural block diagram of an optional chip according to an embodiment of the present disclosure. As shown in Fig. 28, the chip includes multivariate computing resources 2801, an on-chip memory 2802, and a control kernel 2803. The multivariate computing resources 2801, the on-chip memory 2802, and the control kernel 2803 are connected to each other via an on-chip cache coherence bus of the chip.

The multivariate computing resources 2801 include general computing resources and heterogeneous computing resources, the general computing resources include a set of general processors, and the heterogeneous computing resources include a set of heterogeneous acceleration processors. The general processor corresponds to the foregoing general computing unit, and the heterogeneous acceleration processor corresponds to the foregoing heterogeneous computing unit. The on-chip memory 2802 is configured to be shared by one or more general processors among the set of general processors in the general computing resources and one or more heterogeneous acceleration processors among the set of heterogeneous acceleration processors in the heterogeneous computing resources. The control kernel 2803 is configured to perform computing power scheduling on one or more general processors among the set of general processors in the general computing resources and one or more heterogeneous acceleration processors among the set of heterogeneous acceleration processors in the heterogeneous computing resources.

In some embodiments, the chip further includes an input/output device. The input/output device is configured to be shared by one or more general processors among the set of general processors in the multivariate computing resources and one or more heterogeneous acceleration processors among the set of heterogeneous acceleration processors in the heterogeneous computing resources. each general processor among the set of general processors in the general computing resources is a CPU; and the set of heterogeneous acceleration processors in the heterogeneous computing resources includes one or more of: a GPU, an FPGA, or ASIC.

For example, a single-host multi-chip module design is shown in Fig. 29. The collaboration of the general computing resources and the heterogeneous acceleration computing resources is realized at the micro-scale. The general computing resources and the heterogeneous acceleration computing resources share the on-chip memory (the memory on the chip). Decoupling units are collaboratively operated via the on-chip coherence interconnection bus, so as to achieve integration of a plurality of dies, thereby realizing computing power scheduling through unified control kernels.

By means of the chip provided in this embodiment, the chip includes multivariate computing resources, an on-chip memory, and a control kernel, which are connected to each other via an on-chip cache coherence bus of the chip. The multivariate computing resources include general computing resources and heterogeneous computing resources, the general computing resources include a set of general processors, and the heterogeneous computing resources include a set of heterogeneous acceleration processors. The on-chip memory is configured to be shared by one or more general processors among the set of general processors in the general computing resources and one or more heterogeneous acceleration processors among the set of heterogeneous acceleration processors in the heterogeneous computing resources. The control kernel is configured to perform computing power scheduling on one or more general processors among the set of general processors in the general computing resources and one or more heterogeneous acceleration processors among the set of heterogeneous acceleration processors in the heterogeneous computing resources. Therefore, the problem of poor scalability of computing power of multivariate computing power integration solutions in the related art is solved, and the scalability of computing power is improved.

According to yet another aspect of this embodiment, a die is further provided. The die may be configured to implement the foregoing server system such as the foregoing single-host multi-chip system, and what has been described will not be described again.

Fig. 30 is a structural block diagram of an optional die according to an embodiment of the present disclosure. As shown in Fig. 30, the die includes a set of kernels 3001 and one or more memory controllers 3002. The set of kernels 3001 and the one or more memory controllers 3002 are connected to each other via an on-chip cache coherence bus in the die.

The set of kernels 3001 include a control kernel and multivariate processor kernels. The multivariate processor kernels include a set of general processor kernels and a set of heterogeneous acceleration processor kernels, and each kernel among the set of kernels has a private cache (e.g., Level 1 cache and Level 2 cache), and the set of kernels share a specified cache (e.g., Level 3 cache), and one or more memories controlled by at least one memory controller among the one or more memory controllers. The control kernel is configured to perform computing power scheduling on one or more general processor kernels among the set of general processor kernels and one or more heterogeneous acceleration processor kernels among the set of heterogeneous acceleration processor kernels.

In some embodiments, the die further includes an I/O controller. An I/O device controlled by the I/O controller is configured by one or more general processors among the set of general processors in the general computing resources and one or more heterogeneous acceleration processors among the set of heterogeneous acceleration processors in the heterogeneous computing resources. each general processor kernel among the set of general processor kernels is a CPU kernel; and the set of heterogeneous acceleration processor kernels includes one or more of: a GPU kernel, a FPGA kernel, or an ASIC kernel.

It is to be noted that, the chip (chip module) in the foregoing embodiments is described in a chip dimension. Different computing kernels are integrated inside the chip. The smaller dimension of the die refers to the integration of multivariate heterogeneous computing kernels on the die inside the chip. The single-host multi-chip design may be at a chip level, server level, or cabinet-level, and one cabinet may be one server.

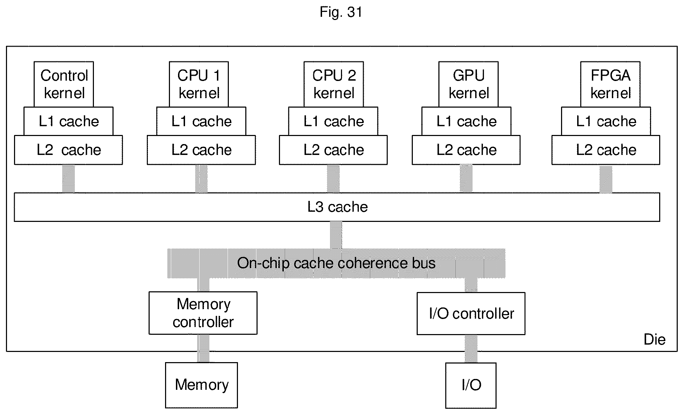

For example, the single-host multi-chip die design is shown in Fig. 31. Different kernels are integrated in the die; and the plurality of kernels have private caches and share the L3 cache, the memory, and the I/O device. The units are connected via an in-die bus multi-kernel cluster, master-slave multi-kernel, and multi-kernel collaboration may be realized. Through various system operation modes such as unified scheduling, different services run on different kernels and operating systems, and facing application requirements, the system design is optimized.

According to the die provided by this embodiment, the die includes a set of kernels and one or more memory controllers, which are connected to each other via an on-chip cache coherence bus in the die. The set of kernels include a control kernel and multivariate processor kernels, where the multivariate processor kernels include a set of general processor kernels and a set of heterogeneous acceleration processor kernels, and each kernel among the set of kernels has a private cache, and the set of kernels share a specified cache, and one or more memories controlled by at least one memory controller among the one or more memory controllers. The control kernel is configured to perform computing power scheduling on one or more general processor kernels among the set of general processor kernels and one or more heterogeneous acceleration processor kernels among the set of heterogeneous acceleration processor kernels. Therefore, the problem of poor scalability of computing power of multivariate computing power integration solutions in the related art is solved, and the scalability of computing power is improved.

For optional examples in this embodiment, refer to the examples described in the foregoing embodiments and the exemplary implementations, and this embodiment will not be repeated thereto.

It is apparent that those skilled in the art should understand that the modules or steps of the present disclosure may be implemented by a general computing device, and may also be gathered together on a single computing device or distributed in network composed of multiple computing devices. The above mentioned modules or steps of the present disclosure may be implemented with program codes executable by the computing device, so that may be stored in a storage device for execution by the computing device, and in some cases, the steps shown or described may be performed in a different sequence than herein, or may be fabricated into individual integrated circuit modules respectively, or multiple modules or steps thereof are fabricated into a single integrated circuit module for implementation. In this way, the present disclosure is not limited to any specific combination of hardware and software.

The above are only the optional embodiments of the present disclosure and are not intended to limit the present disclosure. For those skilled in the art, the present disclosure may have various modifications and variations. Any modifications, equivalent replacements, improvements and the like made within the principle of the present disclosure shall fall within the scope of protection of the present disclosure.

## Claims

1. A server system, comprising
a multivariate computing resource pool, a data storage resource pool, a Switching Module (SM), and a control module, wherein
the multivariate computing resource pool comprises a general computing resource pool and a heterogeneous computing resource pool, the general computing resource pool comprises a set of general computing units, the heterogeneous computing resource pool comprises a set of heterogeneous computing units, and the multivariate computing resource pool is connected to the data storage resource pool via the SM by means of a cache coherence bus inside the server system;
the data storage resource pool comprises one or more data storage resources that are configured to be shared by at least two multivariate computing resources among a plurality of multivariate computing resources in the multivariate computing resource pool, and each of the plurality of multivariate computing resources in the multivariate computing resource pool comprises one or more general computing units among the set of general computing units in the general computing resource pool and one or more heterogeneous computing units among the set of heterogeneous computing units in the heterogeneous computing resource pool; and
the control module is configured to perform computing power scheduling on one or more multivariate computing resources among the plurality of multivariate computing resources in the multivariate computing resource pool, and dynamically allocate one or more data storage resources among a plurality of data storage resources in the data storage resource pool to the one or more multivariate computing resources among the plurality of multivariate computing resources in the multivariate computing resource pool.

2. The server system according to claim 1, further comprising:
an Input/Output Device Module (IODM), connected to the multivariate computing resource pool via the SM by means of the cache coherence bus inside the server system, wherein
the data storage resource pool comprises a memory resource pool and a storage resource pool, the memory resource pool is integrated into one or more memory modules, and the storage resource pool is integrated into one or more Storage Device Modules (SDM); and
the multivariate computing resource pool is integrated into one or morea multivariate computing modules, each multivariate computing module among the one or more multivariate computing modules is connected to one or more other modules in the server system other than the one or more multivariate computing modules via one or more preset interfaces, and the one or more other modules comprise at least one of the following: the SM or the control module.

3. The server system according to claim 2, further comprising:
a heat dissipation module, configured to perform heat dissipation on at least part of devices in the server system;
a power supply module, configured to supply power to the server system; and
a network module, configured to establish a network connection for the server system, wherein
other modules comprise at least one of the following: the heat dissipation module, the power supply module, or the network module.

4. The server system according to claim 2, wherein
the one or more multivariate computing modules comprise a plurality of multivariate computing modules, the plurality of multivariate computing modules are in plug-in connection with a host of the server system, and different multivariate computing modules of the plurality of multivariate computing modules are connected to each other via the cache coherence bus inside the server system.

5. The server system according to claim 1, wherein
the data storage resource pool comprises a memory resource pool and a storage resource pool, the memory resource pool comprises a set of shared memories, and the storage resource pool comprises a set of storage devices; and
the control module is further configured to dynamically allocate one or more shared memories of the set of shared memories in the memory resource pool and one or more storage devices of the set of storage devices in the storage resource pool to one or more multivariate computing resources among the plurality of multivariate computing resources in the multivariate computing resource pool.

6. The server system according to claim 5, further comprising
one or more memory controllers, wherein the set of shared memories comprise a set of Compute Express Link (CXL) memories, the set of CXL memories are memories attached to the one or more memory controllers, the set of CXL memories are divided into a plurality of memory partitions, and one or more memory partitions of the plurality of memory partitions are configured to be allocated to one or more multivariate computing resources among the plurality of multivariate computing resources in the multivariate computing resource pool; and
the SM comprises a set of CXL switch chips, wherein each of the plurality of multivariate computing resources in the multivariate computing resource pool is connected, via one or more CXL switch chips among the set of CXL switch chips by means of the cache coherence bus inside the server system, to at least one memory controller, to which one or more CXL memories among the set of CXL memories are attached, among the one or more memory controllers.

7. The server system according to claim 5, further comprising:
a management module, configured to perform at least one of following managements on the server system: device management, in-band management, out-of-band management, safety management, wherein the management module and the control module are the same module or different modules.

8. The server system according to claim 7, further comprising:
an Input/Output Device Module (IODM), connected to the multivariate computing resource pool via the SM by means of the cache coherence bus inside the server system;
a heat dissipation module, configured to perform heat dissipation on at least part of devices in the server system;
a power supply module, configured to supply power to the server system; and
a network module, configured to establish a network connection for the server system, wherein
the plurality of multivariate computing resources in the multivariate computing resource pool, the shared memories in the memory resource pool, the storage devices in the storage resource pool, the SM, the IODM, the heat dissipation module, the power supply module, and the network module are respectively connected to corresponding interfaces of the management module via at least one of the following buses: a System Management Bus (SMBUS), a Power Management Bus (PMBUS), a Peripheral Component Interconnect express (PCle) bus, a CXL bus, a Universal Asynchronous Receiver/Transmitter (UART) bus, an Inter-Integrated Circuit (I2C) bus, a Serial Peripheral Interface (SPI) bus.

9. The server system according to claim 7, wherein
the management module is configured to perform topology identification on the server system to obtain system topology information of the server system, wherein the system topology information comprises node reference information of system nodes in the server system, the system nodes in the server system correspond to system devices in the server system, and the node reference information comprises at least one of the following: a node type, a power-up state, or a health state; manage device asset information of the system devices of the server system; perform power-on and power-off control on the system devices of the server system to control the system devices of the server system to power on in a preset sequence and power off in a preset sequence; and during the process of powering on the server system or restarting a host of the server system, automatically detect a reset signal to perform system reset.

10. The server system according to claim 1, wherein
an operating system of the server system comprises a plurality of operating system kernels; each operating system kernel among the plurality of operating system kernels corresponds to a corresponding multivariate computing resource among the plurality of multivariate computing resources in the multivariate computing resource pool; each operating system kernel among the plurality of operating system kernels is compiled and run under a corresponding Instruction Set Architecture (ISA) instruction set; the server system is configured to perform computing power scheduling on a running application in the operating system of the server system by using specified system software; and the computing power scheduled by the specified system software is one or more multivariate computing resources among the plurality of multivariate computing resources in the multivariate computing resource pool.

11. The server system according to claim 10, further comprising
a scheduling kernel, wherein the specified system software is configured to perform computing power scheduling on the running application in the operating system of the server system by using a scheduling system on the scheduling kernel; an operating system on each operating system kernel among the plurality of operating system kernels is a private operating system; the plurality of operating system kernels are connected to each other via an inter-kernel communication bus; and the inter-kernel communication bus is configured to perform an inter-kernel communication among the plurality of operating system kernels.

12. The server system according to claim 1, wherein
the control module is further configured to: receive a resource dynamic scheduling request sent by a resource scheduling request party, wherein the resource scheduling request party is a general computing unit among the set of general computing units in the general computing resource pool or a heterogeneous computing unit among the set of heterogeneous computing units in the heterogeneous computing resource pool, the resource dynamic scheduling request is configured to request scheduling of a system resource of a specified resource type, and the system resource of the specified resource type is at least one of the following: a general computing unit among the set of general computing units in the general computing resource pool, a heterogeneous computing unit among the set of heterogeneous computing units in the heterogeneous computing resource pool, a data storage resource in the data storage resource pool; and in response to the received resource dynamic scheduling request, schedule a target system resource, wherein a resource type of the target system resource is the specified resource type.

13. The server system according to claim 12, wherein
the resource dynamic scheduling request is a resource allocation request, wherein the resource allocation request is configured to request allocation of the system resource of the specified resource type for the resource scheduling request party; and
the control module is further configured to, in response to the received resource allocation request, determine, from one or more system resources of the specified resource type that are not allocated by the server system, a system resource to be allocated to the resource scheduling request party, so as to obtain the target system resource, and allocate the target system resource to the resource scheduling request party.

14. The server system according to claim 13, wherein
the control module is further configured to send a resource configuration request to the SM, so as to configure, in the SM, an association relationship between the resource scheduling request party and the target system resource.

15. The server system according to claim 12, wherein
the resource dynamic scheduling request is a resource release request, wherein the resource release request is configured to request releasing of the target system resource allocated to the resource scheduling request party; and
the control module is further configured to, in response to the received resource release request, send a resource position acquisition request to the SM, so as to acquire a physical resource position of the target system resource; and send a reset signal to the target system resource according to the acquired physical resource position, so as to reset the target system resource.

16. The server system according to claim 15, wherein
the target system resource is further configured to, in response to the received reset signal, execute a reset operation after one or more processes running on the target system resource end, and after reset is completed, send, to the control module, an indication message for indicating reset completion of the target system resource.

17. The server system according to claim 1, wherein
an interconnection topology structure among the multivariate computing resources in the multivariate computing resource pool uses at least one of the following mesh structures:
a cross mesh structure, wherein nodes of the cross mesh structure are the plurality of multivariate computing resources in the multivariate computing resource pool, and a node of the cross mesh structure is exclusively connected to one or more adjacent nodes in the same row or the same column;
a three-dimensional mesh structure, wherein nodes of the three-dimensional mesh structure are the plurality of multivariate computing resources in the multivariate computing resource pool, and a node of the three-dimensional mesh structure is exclusively connected to one or more adjacent nodes in the horizontal or vertical direction.

18. The server system according to any one of claims 1 to 17, wherein
each general computing unit among the set of general computing units in the multivariate computing resource pool is a Central Processing Unit (CPU); and the set of heterogeneous computing units in the multivariate computing resource pool comprises one or more of a Graphics Processing Unit (GPU), a Field Programmable Gate Array (FPGA), an Application Specific Integrated Circuit (ASIC) in any combination.

19. A method for scheduling a resource of a server system, wherein
the server system comprises: a multivariate computing resource pool, a data storage resource pool, a SM, and a control module, wherein the multivariate computing resource pool comprises a general computing resource pool and a heterogeneous computing resource pool, wherein the general computing resource pool comprises a set of general computing units, the heterogeneous computing resource pool comprises a set of heterogeneous computing units, and the multivariate computing resource pool is connected to the data storage resource pool via the SM by means of a cache coherence bus inside the server system; the data storage resource pool comprises one or more data storage resources that are configured to be shared by at least two multivariate computing resources among a plurality of multivariate computing resources in the multivariate computing resource pool, and each of the plurality of multivariate computing resources in the multivariate computing resource pool comprises one or more general computing units among the set of general computing units in the general computing resource pool and one or more heterogeneous computing units among the set of heterogeneous computing units in the heterogeneous computing resource pool; and
the method comprises:
performing, by the control module, computing power scheduling on one or more multivariate computing resources among the plurality of multivariate computing resources in the multivariate computing resource pool, and dynamically allocating one or more data storage resources among a plurality of data storage resources in the data storage resource pool to the one or more multivariate computing resources among the plurality of multivariate computing resources in the multivariate computing resource pool.

20. The method according to claim 19, wherein
the performing, by the control module, computing power scheduling on one or more multivariate computing resources among the plurality of multivariate computing resources in the multivariate computing resource pool, and dynamically allocating one or more data storage resources among a plurality of data storage resources in the data storage resource pool to the one or more multivariate computing resources among the plurality of multivariate computing resources in the multivariate computing resource pool comprises:
receiving, by the control module, a resource dynamic scheduling request sent by a resource scheduling request party, wherein the resource scheduling request party is a general computing unit among the set of general computing units in the general computing resource pool or a heterogeneous computing unit among the set of heterogeneous computing units in the heterogeneous computing resource pool, the resource dynamic scheduling request is configured to request scheduling of a system resource of a specified resource type, and the system resource of the specified resource type is at least one of the following: a general computing unit among the set of general computing units in the general computing resource pool, a heterogeneous computing unit among the set of heterogeneous computing units in the heterogeneous computing resource pool, a data storage resource in the data storage resource pool; and
in response to the received resource dynamic scheduling request, scheduling a target system resource by the control module, wherein a resource type of the target system resource is the specified resource type.

21. A chip,
comprising:
multivariate computing resources, an on-chip memory, and a control kernel, which are connected to each other via an on-chip cache coherence bus of the chip, wherein
the multivariate computing resources comprise general computing resources and heterogeneous computing resources, the general computing resources comprise a set of general processors, and the heterogeneous computing resources comprise a set of heterogeneous acceleration processors;
the on-chip memory is configured to be shared by one or more general processors among the set of general processors in the general computing resources and one or more heterogeneous acceleration processors among the set of heterogeneous acceleration processors in the heterogeneous computing resources; and
the control kernel is configured to perform computing power scheduling on one or more general processors among the set of general processors in the general computing resources and one or more heterogeneous acceleration processors among the set of heterogeneous acceleration processors in the heterogeneous computing resources.

22. A die,
comprising:
a set of kernels and one or more memory controllers, which are connected to each other via an on-chip cache coherence bus in the die, wherein
the set of kernels comprise a control kernel and multivariate processor kernels, wherein the multivariate processor kernels comprise a set of general processor kernels and a set of heterogeneous acceleration processor kernels, and each kernel among the set of kernels has a private cache, and the set of kernels share a specified cache and one or more memories controlled by at least one memory controller among the one or more memory controllers; and
the control kernel is configured to perform computing power scheduling on one or more general processor kernels among the set of general processor kernels and one or more heterogeneous acceleration processor kernels among the set of heterogeneous acceleration processor kernels.
